# EUROPEAN PATENT APPLICATION

(11) **EP 2 996 437 A1**
(43) Date of publication of application: **16.03.2016**
(21) Application number: 13883950.1
(22) Date of filing: 08.08.2013
(51) Int. Cl.: H04W 92/18, H04W 24/10, H04W 72/08, H04W 84/22

(54) **COMMUNICATION SYSTEM, BASE STATION, TERMINAL, AND CONTROL METHOD**

(30) Priority: 09.05.2013 WO PCT/JP2013/063080
(71) Applicant: Fujitsu Limited, Kawasaki-shi, Kanagawa 211-8588 (JP)
(72) Inventor: TANAKA, Yoshinori, Kawasaki-shi Kanagawa 211-8588 (JP)
(74) Representative: Schultes, Stephan
(86) International application number: PCT/JP2013/071567
(87) International publication number: WO 2014/181481

(57) **Abstract**

In a terminal (10), a reception processing unit (12) receives allocation information (i.e. a transmission instruction) transmitted from a base station. In a first measurement unit interval in a second processing interval, a measurement signal detection unit (23) detects a measurement signal transmitted by another terminal (10) at a time other than a transmission time indicated by the received allocation information. A transmission processing unit (15) reports information on the measurement signal detected by the measurement signal detection unit (23) to the base station.

## Description

### [Technical Field]

The present invention relates to communication systems, base stations, terminals, and control methods.

### [Background Art]

In standardization of 3rd Generation Partnership Project (3GPP) Long Term Evolution (LTE), in order to reduce traffic between base station devices and terminal devices, discussion on device-to-device (D2D) communication in which terminals communicate directly with each other has begun. Hereinafter, a base station device may be referred to simply as a "base station," and a terminal device may be referred to simply as a "terminal."

To perform D2D communication, a terminal performs processing of discovering a terminal to be a communication partner and processing of measuring the quality of a communication path between the terminals. For example, a technology to introduce new codes capable of uniquely identifying terminals for the terminals to discover each other has been proposed. In this proposal, each terminal transmits a terminal identification code, changing resources (frequencies and times) to map the terminal identification code, according to a hopping pattern specified from a base station. Here, it is difficult for a terminal to receive a terminal identification code transmitted from another terminal at a time when the terminal itself transmits a terminal identification code. Therefore, by changing resources (frequencies and times) to map a terminal identification code, two terminals that overlapped in transmission time of terminal identification codes at a certain point in time are prevented from overlapping in transmission time at a different point in time.

### [Citation List]

### [Patent Citation]

Patent Document 1: Japanese Laid-open Patent Publication No. 2013-34165

### [Non Patent Citation]

Non Patent Document 1: Qualcomm, "LTE Direct Overview," [online], 2012, [Searched April 25, 2013], the Internet <http://s3.amazonaws.com/sdieee/205-LTE+Direct+IEEE+VTC+San+Diego.pdf>

### [Summary of Invention]

### [Technical Problem]

However, in a conventional method for quality measurement of terminal-to-terminal communication paths, terminals continue to transmit a terminal identification code according to a hopping pattern specified from a base station once, thus resulting in the possibility of increasing the time until the quality measurement of communication paths between all terminals is finished, for example.

The technology of the disclosure has been made in view of the above, and has an object of providing a communication system, a base station, a terminal, and a control method capable of increasing the efficiency of quality measurement of terminal-to-terminal communication paths.

### [Solution to Problem]

In a disclosed mode, a report on a measurement signal from another terminal detected by a terminal at a time other than a transmission time of the terminal is received from a terminal capable of direct terminal-to-terminal communication, first allocation information on a transmission time for the terminal to transmit a measurement signal is transmitted to the terminal, second allocation information is formed using the report on a measurement signal detected by the terminal at a time other than the transmission time indicated by the first allocation information, and the formed second allocation information is transmitted to the terminal.

### [Advantageous Effects of Invention]

According to the aspect of the disclosure, the efficiency of quality measurement of terminal-to-terminal communication paths can be increased.

### [Brief Description of Drawings]

FIG. 1 is a diagram illustrating an example of a communication system in a first embodiment.
FIG. 2 is a block diagram illustrating an example of a base station in the first embodiment.
FIG. 3 is a block diagram illustrating an example of a first terminal in the first embodiment.
FIG. 4 is a block diagram illustrating an example of a second terminal in the first embodiment.
FIG. 5 is a flowchart illustrating an example of a processing operation of the base station in the first embodiment.
FIG. 6 is a diagram illustrating an example of a processing operation of the communication system in the first embodiment.
FIG. 7 is a diagram for explaining an example of formation of measurement instructions and transmission and measurement of measurement signals based on the measurement instructions.
FIG. 8 is a diagram for explaining an example of formation of measurement instructions and transmission and measurement of measurement signals based on the measurement instructions.
FIG. 9 is a flowchart illustrating an example of a processing operation of a base station in a second embodiment.
FIG. 10 is a diagram illustrating an example of a processing operation of a communication system in the second embodiment.
FIG. 11 is a diagram illustrating an example of a communication system in a third embodiment.
FIG. 12 is a block diagram illustrating an example of a first terminal in the third embodiment.
FIG. 13 is a block diagram illustrating an example of a second terminal in the third embodiment.
FIG. 14 is a diagram for explaining an example of a processing operation of the communication system in the third embodiment.
FIG. 15 is a diagram for explaining an example of the processing operation of the communication system in the third embodiment.
FIG. 16 is a block diagram illustrating an example of a first terminal in a fourth embodiment.
FIG. 17 is a diagram illustrating an example of a measurement signal in the fourth embodiment.
FIG. 18 is a block diagram illustrating an example of a second terminal in the fourth embodiment.
FIG. 19 is a diagram illustrating a hardware configuration example of a terminal.
FIG. 20 is a diagram illustrating a hardware configuration example of a base station.

### [Embodiments for Carrying Out the Invention]

Hereinafter, embodiments of the communication system, the base station, the terminal, and the control method disclosed in the present application will be described in detail based on the drawings. These embodiments are not intended to limit the communication system, the base station, the terminal, and the control method disclosed in the present application. In the embodiments, components having the same functions are denoted by the same reference numerals, and will not be described redundantly.

### [First Embodiment]

### [Outline of Communication System]

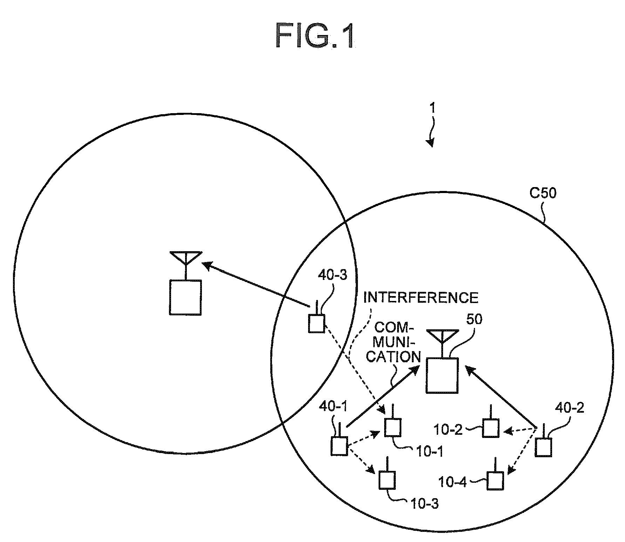

FIG. 1 is a diagram illustrating an example of a communication system in a first embodiment. In FIG. 1, a communication system 1 includes terminals 10-1, -2, -3, and -4, terminals 40-1, -2, and -3, and a base station 50. In FIG. 1, a cell C50 is defined by a reaching area of the base station 50 and a first channel frequency. The terminals 10-1, -2, -3, and -4 are terminals capable of D2D communication. The terminals 40-1, -2, and -3 are terminals that do not perform D2D communication. Hereinafter, when terminals 10-1, -2, -3, and -4 are not distinguished particularly, they may be referred to collectively as a terminal(s) 10. When the terminals 40-1, -2, and -3 are not distinguished particularly, they may be referred to collectively as a terminal(s) 40. The numbers of the terminals 10, the terminals 40, and the base station 50 illustrated in FIG. 1 are an example and not limiting. The base station 50 may be a macro base station, or may be a base station using a radio remote header (RRH), a femto base station, or a micro base station in an LTE system, for example.

In a "first processing interval," a terminal 10 transmits a measurement signal, according to a transmission time and a "measurement signal" that are determined uniquely based on cell identification information on the base station 50 (e.g., a physical cell identification (PCI)) and terminal identification information assigned from the base station 50 (e.g. a radio network temporary ID (RNTI)). Specifically, in the "first processing interval," a terminal 10 autonomously determines a transmission time and a measurement signal, and transmits the determined measurement signal at the determined transmission time. Here, a "measurement signal" is a signal used for measuring the quality measurement of a terminal-to-terminal communication path between one terminal 10 and another terminal 10. A measurement signal may be set based on information other than a PCI and a RNTI. For example, a measurement signal may be set based on numerical information selected randomly for each terminal.

The terminal 10 also performs processing of detecting a measurement signal transmitted from another terminal 10 at a time other than the transmission time of its own in the first processing interval. Then, the terminal 10 transmits (reports) information on the measurement signal detected in the first processing interval (i.e. a measurement report) to the base station 50. The base station 50 may transmit (communicate) information on a timing for the terminal 10 to start transmission and detection of a measurement signal, that is, information on a start timing of the first processing interval (i.e. a measurement start instruction) to the terminal 10.

When the base station 50 receives reports on detection results in the first processing interval from terminals 10, it assigns a measurement signal transmission pattern in a "second processing interval" to each terminal 10. A transmission signal transmission pattern is a pattern defined by a combination of a transmission time and a code sequence used as a measurement signal, for example. Here, the base station 50 assigns transmission patterns so that a terminal 10 associated with a terminal-to-terminal communication path which has not been measured in the first processing interval transmits a measurement signal. The base station 50 transmits assignment information indicating a transmission pattern of each terminal 10 (i.e. a measurement instruction) to each terminal 10.

Based on the assignment information received from the base station 50, the terminal 10 transmits a measurement signal in a "first measurement unit interval" in the second processing interval. The terminal 10 also performs processing of detecting a measurement signal transmitted from another terminal 10 at a time other than the transmission time of its own in the first measurement unit interval. The terminal 10 transmits (reports) information on the measurement signal detected in the first measurement unit interval to the base station 50.

Upon receiving reports on detection results in the first measurement unit interval from terminals 10, the base station 50 assigns a measurement signal transmission pattern in a second measurement unit interval in the second processing interval to each terminal 10. Here, the base station 50 assigns transmission patterns so that a terminal 10 associated with a terminal-to-terminal communication path that has not been measured in the first processing interval and the first measurement unit interval transmits a measurement signal. The base station 50 transmits assignment information indicating the transmission pattern of each terminal 10 to each terminal 10. The assignment of transmission patterns by the base station 50 and the reporting of detection results by the terminals 10 are performed until detection of all terminal-to-terminal communication paths between the terminals 10 in the cell C50 is completed. That is, basically, the second processing interval includes a plurality of measurement unit intervals.

When the second processing interval ends, the base station 50 controls so that the terminals 40 transmit a measurement signal in a "third processing interval." Based on the measurement signals, the terminals 10 detect interference levels.

As above, by the base station 50 controlling the transmission of measurement signals by the terminals 10 using assignment information, the efficiency of quality measurement of terminal-to-terminal communication paths between the terminals 10 that perform D2D communication can be increased.

### [Configuration Example of Base Station 50]

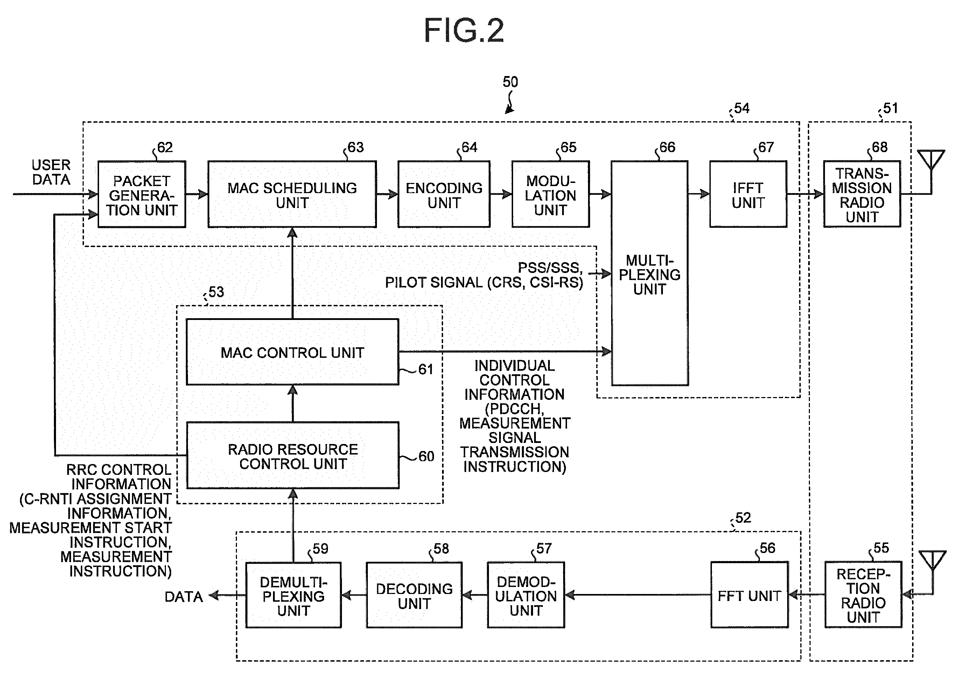

FIG. 2 is a block diagram illustrating an example of a base station in the first embodiment. In FIG. 2, a base station 50 includes a radio unit 51, a reception processing unit 52, a control unit 53, and a transmission processing unit 54. The radio unit 51 includes a reception radio unit 55 and a transmission radio unit 68. The reception processing unit 52 includes an FFT unit 56, a demodulation unit 57, a decoding unit 58, and a demultiplexing unit 59. The control unit 53 includes a radio resource control (RRC) unit 60 and an MAC control unit 61. The transmission processing unit 54 includes a packet generation unit 62, an MAC scheduling unit 63, an encoding unit 64, a modulation unit 65, a multiplexing unit 66, and an IFFT unit 67.

The reception radio unit 55 performs predetermined reception radio processing, such as down-conversion or analog-to-digital conversion, on a received signal received via an antenna, and outputs the received signal after the reception radio processing to the FFT unit 56.

The FFT unit 56 performs fast Fourier transform processing on the received signal received from the reception radio unit 55, and outputs the received signal after the fast Fourier transform processing to the demodulation unit 57.

The demodulation unit 57 demodulates the received signal received from the FFT unit 56, and outputs the demodulated received signal to the decoding unit 58.

The decoding unit 58 decodes the received signal received from the demodulation unit 57, and outputs the decoded received signal to the demultiplexing unit 59.

The demultiplexing unit 59 extracts control information and received data from the received signal received from the decoding unit 58, outputs the extracted control information to the radio resource control unit 60, and outputs the extracted received data to a function unit in a higher layer. Here, the control information output to the radio resource control unit 60 may include the above-described measurement report transmitted from the terminal 10.

The radio resource control unit 60 forms radio resource control information (i.e. radio resource control (RRC) control information), and outputs the formed radio resource control information to the packet generation unit 62.

For example, the radio resource control unit 60 forms radio resource control information including a radio network temporary identifier assigned to a terminal 10, and outputs the formed radio resource control information to the packet generation unit 62.

Before the first processing interval starts, the radio resource control unit 60 forms radio resource control information including the above-described measurement start instruction, and outputs the formed radio resource control information to the packet generation unit 62.

The radio resource control unit 60 also forms radio resource control information, based on control information received from the demultiplexing unit 59, and outputs the formed radio resource control information to the packet generation unit 62. For example, when the radio resource control unit 60 receives measurement reports in the second processing interval, it determines terminal-to-terminal communication paths that have not been measured yet based on the measurement reports, and forms assignment information (i.e. a measurement instruction) to terminals 10 associated with the determined terminal communication paths. Then, the radio resource control unit 60 forms radio resource control information including the formed measurement instruction, and outputs the formed radio resource control information to the packet generation unit 62.

The radio resource control unit 60 also determines whether quality measurement has been completed or not on all the terminal-to-terminal communication paths. When it determines that the measurement has been completed, that is, when it determines that the second processing interval ends, it outputs a completion notification to the MAC control unit 61.

The MAC control unit 61 allocates resources to be used for communication between its own station and the terminals 10. The resources are defined by times and frequencies, for example. Then, the MAC control unit 61 outputs individual control information including information on a resource allocated (hereinafter, sometimes referred to as an "allocated resource") to the MAC scheduling unit 63 and the multiplexing unit 66.

When the MAC control unit 61 receives a completion notification from the radio resource control unit 60, it outputs, to the multiplexing unit 66, individual control information including a measurement signal transmission instruction to command transmission of a measurement signal to the terminals 40.

The packet generation unit 62 receives transmission data addressed to a terminal 10 or addressed to a terminal 40, that is, user data, and radio resource control information addressed from the radio resource control unit 60 to a terminal 10, and generates a transmission packet using the received user data and radio resource control information. Then, the packet generation unit 62 outputs the generated transmission packet to the MAC scheduling unit 63.

The MAC scheduling unit 63 outputs the packet addressed to the terminal 10 or addressed to the terminal 40 received from the packet generation unit 62 to the encoding unit 64 at a timing corresponding to a time allocated to the terminal 10 or the terminal 40 by the MAC control unit 61. The MAC scheduling unit 63 may divide a packet into data units of a predetermined data size, and output the data units to the encoding unit 64.

The encoding unit 64 performs encoding processing on the packet received from the MAC scheduling unit 63, and outputs the encoded packet to the modulation unit 65.

The modulation unit 65 modulates the packet after the encoding processing received from the encoding unit 64, and outputs the modulated packet to the multiplexing unit 66.

The multiplexing unit 66 maps and multiplexes input signals to a predetermined resource, and outputs a multiplexed signal to the IFFT unit 67.

Specifically, the multiplexing unit 66 receives individual control information from the MAC control unit 61, and maps it to a resource area allocated to a downlink control channel (e.g. a physical downlink control channel (PDCCH)).

The multiplexing unit 66 also receives a packet from the modulation unit 65, and maps it to a downlink allocated resource indicated by the individual control information.

The multiplexing unit 66 also receives a common reference signal (CRS) that is common in the cell C50, a channel state measurement reference signal (channel state information-reference signal (CSI-RS)), and a synchronization signal (primary synchronisation signal (PSS), secondary synchronisation signal (SSS)). The multiplexing unit 66 maps the common reference signal, the channel state measurement reference signal, and the synchronization signal to a predetermined resource.

The IFFT unit 67 performs inverse fast Fourier transform processing on the multiplexed signal received from the multiplexing unit 66, thereby forming an orthogonal frequency division multiplexing (OFDM) signal, and outputs the formed OFDM signal to the transmission radio unit 68. The IFFT unit 67 may perform processing to add a cyclic prefix (CP) to each symbol.

The transmission radio unit 68 performs predetermined transmission radio processing, such as digital-to-analog conversion or up-conversion, on the OFDM signal received from the IFFT unit 67 to form a radio signal, and transmits the formed radio signal via an antenna.

### [Configuration Example of Terminal 10]

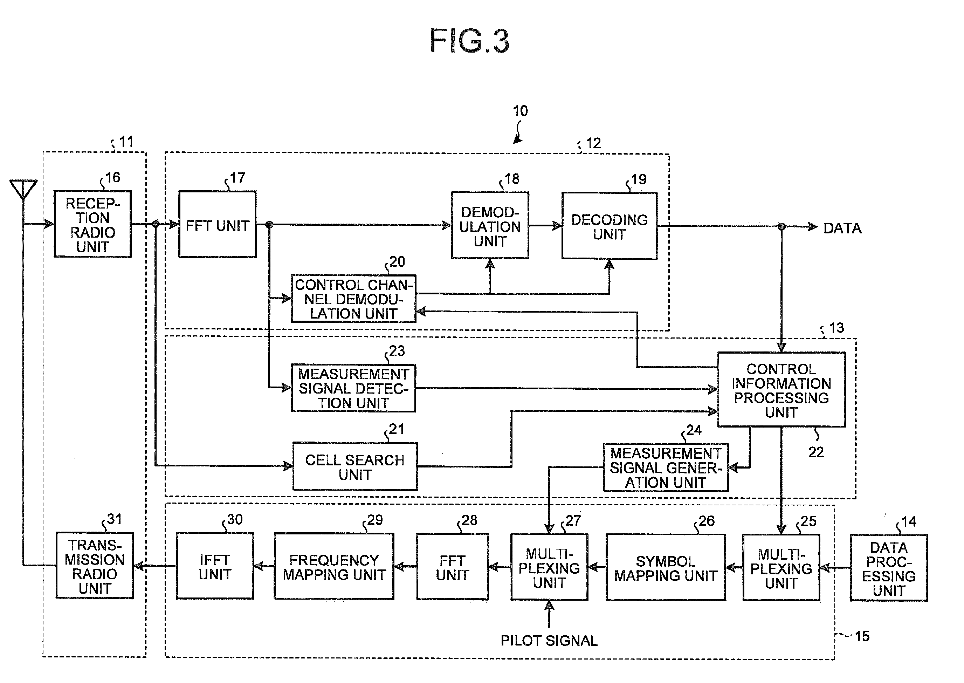

FIG. 3 is a block diagram illustrating an example of a first terminal in the first embodiment. In FIG. 3, the terminal 10 includes a radio unit 11, a reception processing unit 12, a control unit 13, a data processing unit 14, and a transmission processing unit 15. The radio unit 11 includes a reception radio unit 16 and a transmission radio unit 31. The reception processing unit 12 includes an FFT unit 17, a demodulation unit 18, a decoding unit 19, and a control channel demodulation unit 20. The control unit 13 includes a cell search unit 21, a control information processing unit 22, a measurement signal detection unit 23, and a measurement signal generation unit 24. The transmission processing unit 15 includes a multiplexing unit 25, a symbol mapping unit 26, a multiplexing unit 27, an FFT unit 28, a frequency mapping unit 29, and an IFFT unit 30.

The reception radio unit 16 performs predetermined reception radio processing, such as down-conversion or analog-to-digital conversion, on a received signal received via an antenna, and outputs the received signal after the reception radio processing to the FFT unit 17 and the cell search unit 21.

Based on a synchronization signal included in the received signal after the reception radio processing, the cell search unit 21 determines a cell ID (e.g. a physical cell identification (PCI)) associated with the synchronization signal. That is, the cell search unit 21 determines the cell ID of the cell C50 in which its own station is located. Then, the cell search unit 21 outputs the determined cell ID to the control information processing unit 22.

The FFT unit 17 performs fast Fourier transform processing on the received signal after the reception radio processing, and outputs the received signal after the fast Fourier transform processing to the demodulation unit 18, the control channel demodulation unit 20, and the measurement signal detection unit 23.

The demodulation unit 18 receives resource allocation information from the control channel demodulation unit 20, demodulates a signal mapped to a resource corresponding to the resource allocation information among received signals received from the FFT unit 17, and outputs the demodulated received signal to the decoding unit 19.

The decoding unit 19 receives resource allocation information from the control channel demodulation unit 20, and decodes a signal mapped to a resource corresponding to the resource allocation information among received signals received from the demodulation unit 18, and outputs received data obtained.

The control channel demodulation unit 20 receives a radio network temporary identifier from the control information processing unit 22, and searches for control information addressed to its own station in a portion corresponding to a search space in a PDCCH region indicated by the RNTI among received signals received from the FFT unit 17. When the control channel demodulation unit 20 finds resource allocation information addressed to its own station, it outputs the resource allocation information to the demodulation unit 18 and the decoding unit 19.

The measurement signal detection unit 23 performs detection processing on a measurement signal transmitted from another terminal 10 or a terminal 40 at a time other than a transmission time of its own station, and outputs a detection result to the control information processing unit 22.

The control information processing unit 22 extracts an RNTI transmitted from the base station 50 from received data output from the decoding unit 19, and outputs the extracted RNTI to the control channel demodulation unit 20.

In the first processing interval, the control information processing unit 22 determines a transmission time of its own station and a measurement signal, based on the PCI of the base station 50 and the radio network temporary identifier. Then, the control information processing unit 22 causes the measurement signal generation unit 24 to generate the determined measurement signal, and causes the measurement signal to be output at the determined transmission time. Further, the control information processing unit 22 forms a report on measurement in the first processing interval, and outputs the formed measurement report to the multiplexing unit 25. Details of the measurement signal will be described in detail below.

In the second processing interval, the control information processing unit 22 causes the measurement signal generation unit 24 to generate a measurement signal indicated by a measurement instruction included in received data, and causes the measurement signal to be output at a transmission time indicated by the measurement instruction. The control information processing unit 22 forms a report on measurement in the second processing interval, and outputs the formed measurement report to the multiplexing unit 25. The measurement report is formed on each measurement unit interval, and transmitted to the base station 50.

In the third processing interval, the control information processing unit 22 forms a measurement report on a measurement signal of a terminal 40 detected by the measurement signal detection unit 23, and outputs the formed measurement report to the multiplexing unit 25.

The data processing unit 14 outputs user data to the multiplexing unit 25.

The multiplexing unit 25 maps the user data received from the data processing unit 14 and the various types of information received from the control information processing unit 22 to a predetermined resource, thereby forming a multiplexed signal, and outputs the formed multiplexed signal to the symbol mapping unit 26.

The symbol mapping unit 26 maps the multiplexed signal received from the multiplexing unit 25 to symbols, and outputs a modulated signal obtained to the multiplexing unit 27.

The multiplexing unit 27 multiplexes the modulated signal received from the symbol mapping unit 26 and a pilot signal, and outputs a multiplexed signal to the FFT unit 28.

The FFT unit 28 performs fast Fourier transform processing on the multiplexed signal received from the multiplexing unit 27, and outputs the multiplexed signal after the fast Fourier transform processing to the frequency mapping unit 29.

The frequency mapping unit 29 maps the multiplexed signal received from the FFT unit 28 to a predetermined frequency, and outputs a transmission signal obtained to the IFFT unit 30.

The IFFT unit 30 performs inverse fast Fourier transform processing on the transmission signal received from the frequency mapping unit 29, thereby forming an OFDM signal, and outputs the formed OFDM signal to the transmission radio unit 31.

The transmission radio unit 31 performs predetermined transmission radio processing, such as digital-to-analog conversion or up-conversion, on the OFDM signal received from the IFFT unit 30 to form a radio signal, and transmits the formed radio signal via the antenna.

### [Configuration Example of Terminal 40]

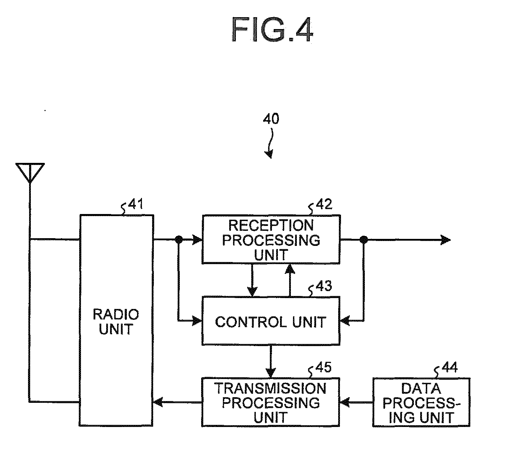

FIG. 4 is a block diagram illustrating an example of a second terminal in the first embodiment. In FIG. 4, the terminal 40 includes a radio unit 41, a reception processing unit 42, a control unit 43, a data processing unit 44, and a transmission processing unit 45. The basic configuration of the terminal 40 is identical to that of the terminal 10.

Specifically, the radio unit 41 corresponds to the radio unit 11, and the reception processing unit 42 corresponds to the reception processing unit 12. The control unit 43 corresponds to the control unit 13, and the data processing unit 44 corresponds to the data processing unit 14. The transmission processing unit 45 corresponds to the transmission processing unit 15.

However, the terminal 40 is a terminal that does not perform D2D communication, and thus does not execute processing in the first processing interval and the second processing interval. In the terminal 40, when the control unit 43 receives a measurement signal transmission instruction from the base station 50 in the third processing interval, it outputs a measurement transmission signal to the transmission processing unit 45 at a transmission time corresponding to the instruction. With this, a measurement signal is transmitted from the terminal 40. The measurement signal is used for measuring the level of interference of the terminal 40 with a terminal 10.

### [Operation Example of Communication System 1]

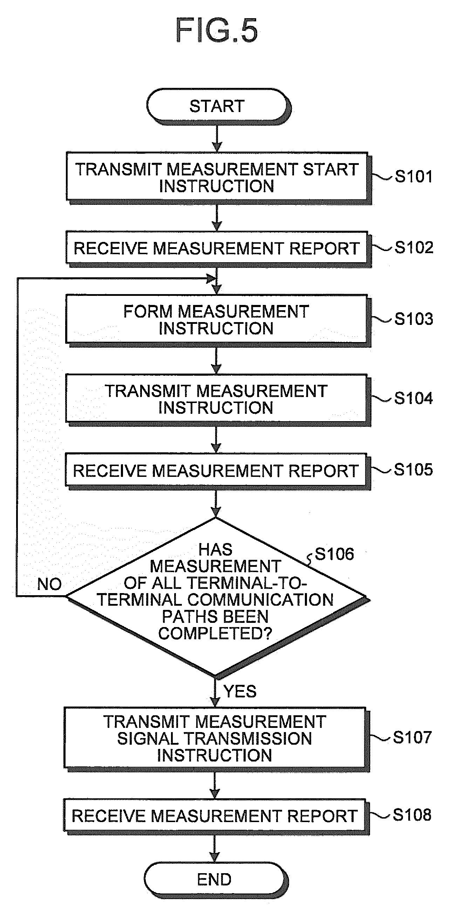

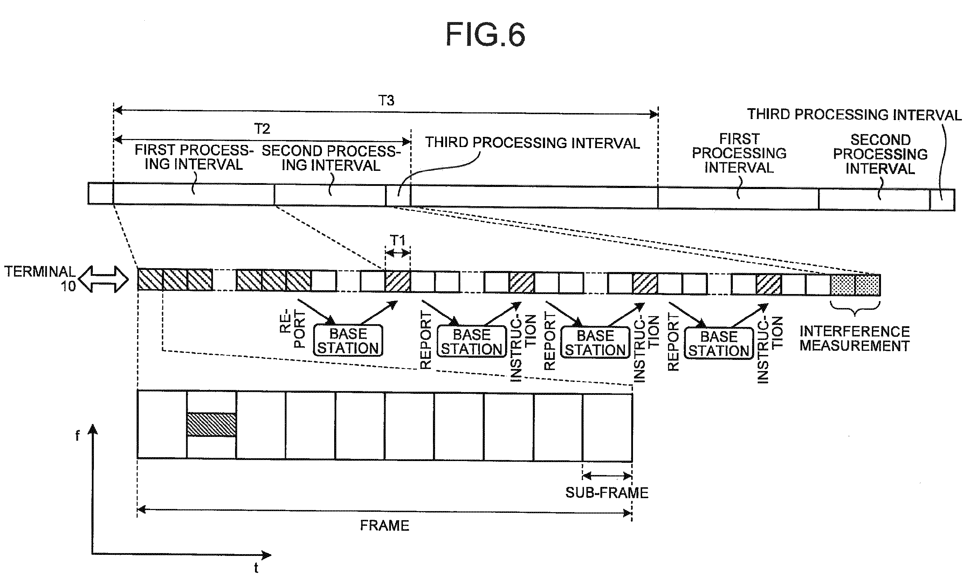

An example of a processing operation of a communication system 1 having the above configuration will be described. FIG. 5 is a flowchart illustrating an example of a processing operation of the base station in the first embodiment. FIG. 6 is a diagram illustrating an example of a processing operation of the communication system in the first embodiment.

### <About First Processing Interval>

The radio resource control unit 60 in the base station 50 forms radio resource control information including a measurement start instruction, and transmits the formed radio resource control information to a terminal 10 (step S101).

Upon receiving the radio resource control information including the measurement start instruction, the terminal 10 starts processing in the first processing interval. First, the terminal 10 transmits a measurement signal, according to a measurement signal transmission rule. For example, the terminal 10 determines the number and the cyclic shift amount of a Zadoff-Chu (ZC) sequence, a measurement signal to be transmitted by the terminal 10, and the pattern of sub-frames in which the terminal 10 transmits the measurement signal, based on the PCI of the cell C50 and the RNTI assigned to the terminal 10. The ZC sequence is identical to a ZC sequence used by a terminal 40 as a Random Access Preamble (RACH) preamble. That is, the terminal 10 uses, as a measurement signal, a code sequence of the same type as that of a code sequence used in a RACH preamble.

For example, the sequence length N_{zc} of a ZC sequence used in a RACH preamble is N_{zc} = 839, and there are maximum 64 different cyclic shift amounts of a ZC sequence. Therefore, all patterns of the sequence length can be represented by ten bits, and all patterns of the cyclic shift amount can be represented by six bits. The PCI is represented by nine bits, and the RNTI is represented by sixteen bits. Thus, the terminal 10 determines the ZC sequence of a sequence number represented by a bit sequence consisting of the bit sequence of the PCI and the last bit of the RNTI (i.e. the sixteenth bit). The terminal 10 also determines the cyclic shift amount corresponding to a bit sequence consisting of the tenth bit to the fifteenth bit of the RNTI. The terminal 10 also determines the transmission sub-frame pattern corresponding to a bit sequence consisting of the first bit to the ninth bit of the RNTI. For example, when the number N of sub-frames in which any of the terminals 10 transmits a measurement signal in the first processing interval is set to twelve, and the number M of sub-frames in which one terminal 10 transmits a measurement signal in the first processing interval is set to four, the number K of transmission sub-frame patterns is 495. Therefore, a bit sequence of nine bits can represent all the transmission sub-frame patterns. In an example in FIG. 6, frames hatched in the first processing interval are transmission frames including transmission sub-frames, and the second sub-frame of ten sub-frames in each transmission frame is a transmission sub-frame.

The terminal 10 transmits a measurement signal in the measurement signal and transmission sub-frames determined based on the PCI of the cell C50 and the RNTI assigned to the terminal 10. The terminal 10 also detects a measurement signal being transmitted by another terminal 10 at a timing when it does not transmit a measurement signal.

Then, the terminal 10 transmits (reports) information on a measurement signal detected in the first processing interval to the base station 50 as a measurement report. The base station 50 receives the measurement report in the first processing interval (step S102).

As above, in the first processing interval, the terminal 10 autonomously determines a measurement signal and transmission sub-frames, based on the PCI of the cell C50 and the RNTI assigned to the terminal 10, and transmits the determined measurement signal in the transmission sub-frames. This can eliminate processing by the base station 50 of allocating a measurement signal and transmission sub-frames to the terminal 10.

Further, a ZC sequence to be used by the terminal 10 is determined based on the PCI, which can prevent the same ZC sequence from being used between adjacent cells.

Furthermore, the terminal 10 can determine a ZC sequence transmitted by another terminal 10 located in the cell C50, based on the PCI of the cell C50. This can eliminate processing by the base station 50 of communicating a ZC sequence to be detected to the terminal 10.

### <About Second Processing Interval>

When the radio resource control unit 60 in the base station 50 receives measurement reports in the first processing interval from the terminals 10, it determines terminal-to-terminal communication paths that have not been measured yet, based on the measurement reports, and forms allocation information (i.e. a measurement instruction) to terminals 10 associated with the determined terminal-to-terminal communication paths (step S103).

Then, the radio resource control unit 60 transmits the measurement instruction to the terminals 10 associated with the measurement instruction (step S104). The measurement instruction is a measurement instruction on the above-described first measurement unit interval.

In the first measurement unit interval, the control information processing unit 22 in the terminal 10 having received the measurement instruction causes the measurement signal generation unit 24 to generate a measurement signal indicated by the measurement instruction, and causes the measurement signal to be transmitted at a transmission time indicated by the measurement instruction.

The measurement signal detection unit 23 in the terminal 10 also performs detection processing on a measurement signal transmitted from another terminal 10 or a terminal 40 at a time other than the transmission time of its own station in the first measurement unit interval, and outputs a detection result to the control information processing unit 22. The control information processing unit 22 forms a measurement report in the first measurement unit interval, and transmits the formed measurement report to the base station 50.

The radio resource control unit 60 in the base station 50 receives measurement reports on the first measurement unit interval (step S105).

Then, the radio resource control unit 60 determines whether measurement of all terminal-to-terminal communication paths between the terminals 10 in the cell C50 has been completed or not (step S106).

When the radio resource control unit 60 determines that it has not been completed (step S106 No), it forms a measurement instruction in the second measurement unit interval (step S103). Here, the radio resource control unit 60 assigns transmission patterns so that terminals 10 associated with terminal-to-terminal communication paths that have not been measured in the first processing interval and the first measurement unit interval transmit a measurement signal. The assignment of transmission patterns by the base station 50 and the reporting of detection results by the terminals 10 are performed until detection of all the terminal-to-terminal communication paths between the terminals 10 in the cell C50 is completed. That is, processing from step S103 to step S106 is repeated until detection of all the terminal-to-terminal communication paths between the terminals 10 in the cell C50 is completed.

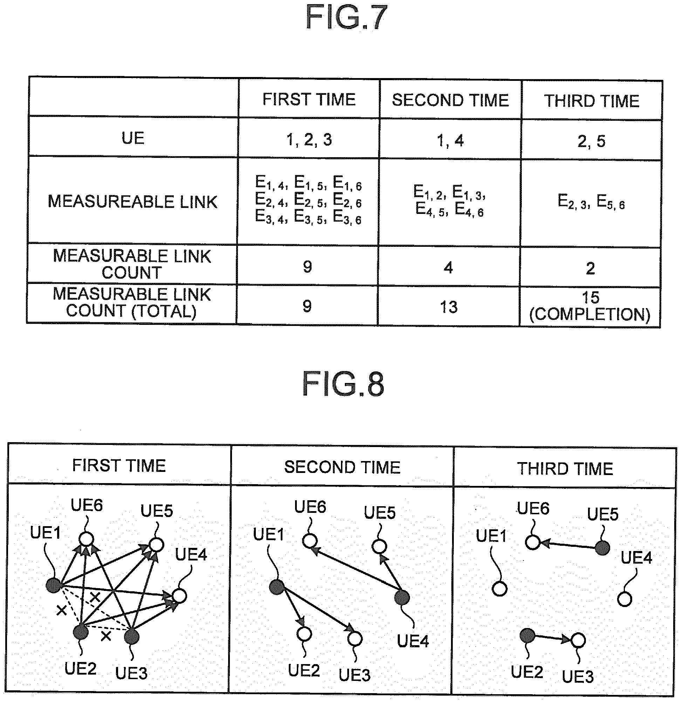

Here, formation of a measurement instruction, and transmission and measurement of a measurement signal based on a measurement instruction will be described with a specific example. FIGS. 7 and 8 are diagrams for explaining an example of formation of a measurement instruction, and transmission and measurement of a measurement signal based on a measurement instruction.

Suppose terminal-to-terminal communication paths between six terminals 10 (UEs 1 to 6 in FIGS. 7 and 8) have not been measured at the time when the first processing interval ends. In this case, as illustrated in FIG. 7, for example, the base station 50 forms a measurement instruction to cause UEs 1 to 3 to transmit measurement signals in the first measurement unit interval (written as First Time in the figure). Then, the base station 50 transmits the measurement instruction to UEs 1 to 3. Then, as illustrated in FIG. 8, UEs 1 to 3 having received the measurement instruction transmit measurement signals in the first measurement unit interval (written as First Time in the figure), and UEs 4 to 6 detect the measurement signals transmitted from UEs 1 to 3. Then, UEs 4 to 6 transmit measurement reports in the first measurement unit interval to the base station 50. Here, measurable links in the first measurement unit interval (i.e. measurable terminal-to-terminal communication paths) are nine, E_{1,4}, E_{1,5}, E_{1,6}, E_{2,4}, E_{2,5}, E_{2,6}, E_{3,4}, E_{3,5}, and E_{3,6}. E_{1,4} unit a terminal-to-terminal communication path between UE 1 and UE 4, for example.

Then, as illustrated in FIG. 7, for example, the base station 50 forms a measurement instruction to cause UEs 1 and 4 to transmit measurement signals in the second measurement unit interval (written as Second Time in the figure). Then, the base station 50 transmits the measurement instruction to UEs 1 and 4. Then, as illustrated in FIG. 8, UEs 1 and 4 having received the measurement instruction transmit measurement signals in the second measurement unit interval (written as Second Time in the figure), and UEs 2, 3, 5, and 6 detect the measurement signals transmitted from UEs 1 and 4. Then, UEs 2, 3, 5 and 6 transmit measurement reports in the second measurement unit interval to the base station 50. Here, new measurable links in the second measurement unit interval (i.e. measurable terminal-to-terminal communication paths) are four, E_{1,2}, E_{1,3}, E_{4,5}, and E_{4,6}.

Then, as illustrated in FIG. 7, for example, the base station 50 forms a measurement instruction to cause UEs 2 and 5 to transmit measurement signals in the third measurement unit interval (written as Third Time in the figure). Then, the base station 50 transmits the measurement instruction to UEs 2 and 5. Then, as illustrated in FIG. 8, UEs 2 and 5 having received the measurement instruction transmit measurement signals in the third measurement unit interval (written as Third Time in the figure), and UEs 3 and 6 detect the transmission signals transmitted from UEs 2 and 5. Then, UEs 2 and 5 transmit measurement reports in the second measurement unit interval to the base station 50. Here, new measurable links in the third measurement unit interval (i.e. measurable terminal-to-terminal communication paths) are two, E_{2,3} and E_{5,6}. This completes the measurement of all the terminal-to-terminal communication paths.

### <About Third Processing Interval>

On the other hand, when it is determined that the measurement has been completed (step S106 Yes), the third processing interval starts. Specifically, the MAC control unit 61 in the base station 50 transmits individual control information including a measurement signal transmission instruction to command the terminals 40 to transmit a measurement signal (step S107).

When the control unit 43 in the terminal 40 receives the measurement signal transmission instruction from the base station 50 in the third processing interval, it transmits a measurement transmission signal at a transmission time corresponding to the instruction.

Then, the control information processing unit 22 in the terminal 10 forms a measurement report on the measurement signal of the terminal 40 detected by the measurement signal detection unit 23 in the third processing interval, and transmits (reports) the formed measurement report to the base station 50.

The base station 50 receives measurement reports in the third processing interval transmitted from the terminals 10 (step S108).

The base station 50 may communicate measurement period T1, measurement duration T2, and measurement cycle T3 in FIG. 6 to the terminals 10. The base station 50 may determine T1, T2 and T3 based on the number of the terminals 10, an inter-cell coordination result, or the like, for example. This allows the terminals 10 to autonomously repeat a set from the first processing interval to the third processing interval. However, T2 can vary, and thus does not necessarily need to be specified. Measurement period T1 is a unit interval in which measurement and reporting are performed in the second processing interval. Measurement duration T2 is a period from the first processing interval to the third processing interval. Measurement cycle T3 is a cycle in which the set from the first processing interval to the third processing interval is repeated.

As above, according to this embodiment, the transmission processing unit 15 in the terminal 10 transmits, in the first processing interval, a measurement signal determined uniquely based on cell identification information on the base station 50 (i.e. the PCI) and terminal identification information assigned from the base station 50 (i.e. the RNTI), according to control by the control unit 13. The measurement signal detection unit 23 in the terminal 10 detects a measurement signal transmitted from another terminal 10 at a time other than the transmission time of the terminal 10 in the first processing interval. The transmission processing unit 15 reports information on the measurement signal detected by the measurement signal detection unit 23 to the base station 50.

This configuration of the terminal 10 allows the terminal 10 to autonomously determine a measurement signal and transmission sub-frames and transmit the determined measurement signal in the transmission sub-frames. This can eliminate processing by the base station 50 of allocating measurement signals and transmission sub-frames to the terminals 10, reducing the load of the base station 50 and reducing signaling.

Further, this configuration of the terminal 10 allows determination of a measurement signal to be transmitted by the terminal 10 based on cell identification information, thus preventing use of the same measurement signal between adjacent cells.

Furthermore, this configuration of the terminal 10 allows the terminal 10 to determine a measurement signal transmitted by another terminal 10 located in the same cell. This can eliminate processing by the base station 50 of communicating measurement signals to be detected to the terminals 10, reducing the load of the base station 50 and reducing signaling.

Moreover, this configuration of the terminal 10 allows reporting of information on measurement signals detected in the first processing interval to the base station 50, reducing the time until the second processing interval is completed.

The reception processing unit 12 in the terminal 10 receives allocation information (i.e. a transmission instruction) transmitted from the base station 50. In the first measurement unit interval in the second processing interval, the measurement signal detection unit 23 detects a measurement signal transmitted by another terminal 10 at a time other than a transmission time indicated by the received allocation information. Then, the transmission processing unit 15 reports information on the measurement signal detected by the measurement signal detection unit 23 to the base station 50.

This configuration of the terminal 10 allows reporting of a measurement result in the first measurement unit interval to the base station 50.

The reception processing unit 52 in the base station 50 receives reports on measurement signals from other terminals 10 detected by terminals 10 in the first measurement unit interval in the second processing interval. Based on the received reports, the control unit 53 forms allocation information (i.e. a measurement instruction) in the second measurement unit interval, and causes the transmission processing unit 54 to transmit it.

This configuration of the base station 50 allows appropriate control of a terminal 10 caused to transmit a measurement signal in the second measurement unit interval and a terminal 10 caused to detect the measurement signal. As a result, the efficiency of quality measurement of terminal-to-terminal communication paths can be increased.

The control unit 53 in the base station 50 causes the transmission processing unit 54 to transmit an instruction to cause the terminals 40 to transmit a measurement signal in the third processing interval. Measurement signals transmitted by the terminals 40 are of the same type as that of measurement signals transmitted by the terminals 10.

This configuration of the base station 50 allows the terminals 10 to measure the level of interference by the terminals 40. Further, since measurement signals transmitted by the terminals 40 are of the same type as that of measurement signals transmitted by the terminals 10, the base station 50 can measure the level of interference of signals transmitted from the terminals 10 with signals transmitted from the terminals 40.

### [Second Embodiment]

In the first embodiment, the first processing period in which the terminals 10 perform transmission and measurement of measurement signals is provided. In contrast, the second embodiment is an embodiment in which the first processing interval is not provided. The basic configurations of a base station and terminals in the second embodiment are basically the same as those of the base station 50 and the terminals 10 and 40 in the first embodiment, and thus will be described with reference to FIGS. 2, 3, and 4.

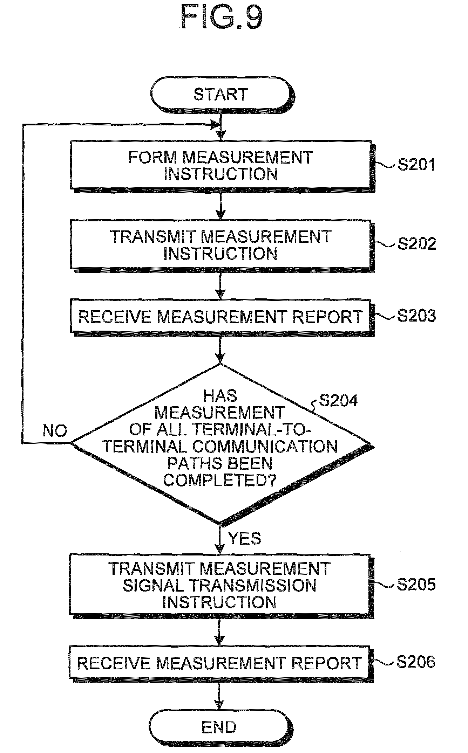

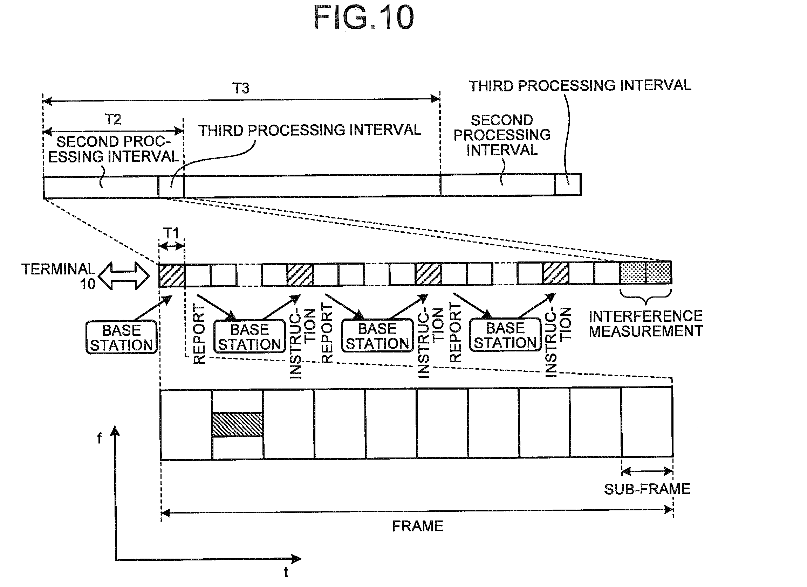

FIG. 9 is a flowchart illustrating an example of a processing operation of a base station in the second embodiment. FIG. 10 is a diagram illustrating an example of a processing operation of a communication system in the second embodiment.

### <About Second Processing Interval>

A radio resource control unit 60 in a base station 50 forms allocation information (i.e. a measurement instruction) to terminals 10 on a first measurement unit period (step S201).

Then, the radio resource control unit 60 transmits the measurement instruction to the terminals 10 associated with the measurement instruction (step S202).

In the first measurement unit interval, a control information processing unit 22 in the terminal 10 having received the measurement instruction causes a measurement signal generation unit 24 to generate a measurement signal indicated by the measurement instruction, and causes the measurement signal to be transmitted at a transmission time indicated by the measurement instruction. In the example in FIG. 10, hatched frames in a second processing interval are transmission frames including transmission sub-frames, and the second sub-frame of ten sub-frames in each transmission frame is a transmission sub-frame.

The measurement signal generation unit 24 in the terminal 10 also performs detection processing on a measurement signal transmitted from another terminal 10 or a terminal 40 at a time other than the transmission time of its own station in the first measurement unit interval, and outputs a detection result to the control information processing unit 22. The control information processing unit 22 forms a measurement report in the first measurement unit interval, and transmits the formed measurement report to the base station 50.

The radio resource control unit 60 in the base station 50 receives measurement reports on the first measurement unit interval (step S203).

Then, the radio resource control unit 60 determines whether measurement of all terminal-to-terminal communication paths between the terminals 10 in a cell C50 has been completed or not (step S204).

When the radio resource control unit 60 determines that it has not been completed (No at step S204), it forms a measurement instruction on a second measurement unit interval (step S201). Here, the radio resource control unit 60 assigns transmission patterns so that terminals 10 associated with terminal-to-terminal communication paths that have not been measured in the first processing interval and the first measurement unit interval transmit a measurement signal. The assignment of transmission patterns by the base station 50 and the reporting of detection results by the terminals 10 are performed until detection of all the terminal-to-terminal communication paths between the terminals 10 in the cell C50 is completed. That is, processing from step S201 to step S204 is repeated until detection of all the terminal-to-terminal communication paths between the terminals 10 in the cell C50 is completed.

### <About Third Processing Interval>

On the other hand, when it is determined that the measurement has been completed (step S204 Yes), a third processing interval starts. Specifically, a MAC control unit 61 in the base station 50 transmits individual control information including a measurement signal transmission instruction to command terminals 40 to transmit a measurement signal (step S205).

When a control unit 43 in a terminal 40 receives the measurement signal transmission instruction from the base station 50 in the third processing interval, it causes a measurement transmission signal to be transmitted at a transmission time corresponding to the instruction.

Then, the control information processing unit 22 in the terminal 10 forms a measurement report on the measurement signal of the terminal 40 detected by the measurement signal detection unit 23 in the third processing interval, and transmits (reports) the formed measurement report to the base station 50.

The base station 50 receives the measurement report in the third processing interval transmitted from the terminal 10 (step S206).

As above, according to this embodiment, a reception processing unit 12 in the terminal 10 receives allocation information (i.e. a transmission instruction) transmitted from the base station 50. Then, in the first measurement unit interval in the second processing interval, the measurement signal detection unit 23 detects a measurement signal transmitted from another terminal 10 at a time other than a transmission time indicated by the received allocation information. Then, a transmission processing unit 15 reports information on the measurement signal detected by the measurement signal detection unit 23 to the base station 50.

This configuration of the terminal 10 allows reporting of a measurement result in the first measurement unit interval to the base station 50.

A reception processing unit 52 in the base station 50 receives reports on measurement signals from other terminals 10 detected by terminals 10 in the first measurement unit interval in the second processing interval. Based on the received reports, the control unit 53 forms allocation information (i.e. a measurement instruction) in the second measurement unit interval, and causes the transmission processing unit 54 to transmit it.

This configuration of the base station 50 allows appropriate control of a terminal 10 caused to transmit a measurement signal in the second measurement unit interval and a terminal 10 caused to detect the measurement signal. As a result, the efficiency of quality measurement of terminal-to-terminal communication paths can be increased.

The control unit 53 in the base station 50 causes the transmission processing unit 54 to transmit an instruction to cause the terminals 40 to transmit a measurement signal in the third processing interval. Measurement signals transmitted by the terminals 40 are of the same type as that of measurement signals transmitted by the terminals 10.

This configuration of the base station 50 allows the terminals 10 to measure the level of interference by the terminals 40. Further, since measurement signals transmitted by the terminals 40 are of the same type as that of measurement signals transmitted by the terminals 10, the base station 50 can measure the level of interference of signals transmitted from the terminals 10 with signals transmitted from the terminals 40.

### [Third Embodiment]

In the first and second embodiments, a terminal 10 transmits a measurement signal, based on an instruction from the base station 50 or cell identification information on the base station 50 and terminal identification information assigned from the base station 50 to the terminal 10. In contrast, in the third embodiment, a terminal transmits a measurement signal, based on a random number generated randomly by the terminal itself. Specifically, in the first and second embodiments, it is assumed that the terminals 10 are located within the cell of the base station 50. In contrast, in the third embodiment, terminals may be located within the cell of a base station, or may be located outside the cell. Further, in the third embodiment, it is assumed that synchronization is established between terminals. For example, based on a synchronization signal transmitted from one terminal, another terminal establishes synchronization with the terminal.

### [Outline of Communication System]

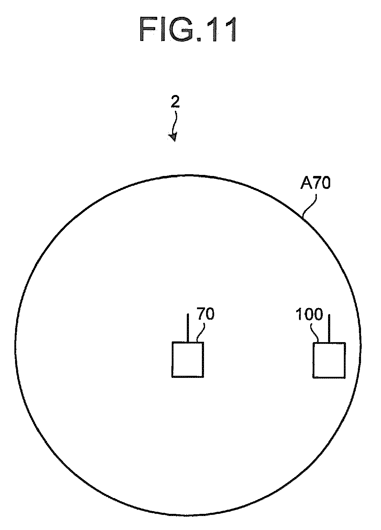

FIG. 11 is a diagram illustrating an example of a communication system in the third embodiment. In FIG. 11, a communication system 2 includes a terminal 70 and a terminal 100. The terminal 70 and the terminal 100 are terminals having the same basic configuration. Here, the terminal 70 is regarded as a "first terminal" that starts processing of discovering a terminal located in a surrounding area, that is, a "first terminal" to transmit a measurement signal, and the terminal 100 is regarded as a "second terminal" to receive the measurement terminal. Therefore, the terminal 100 may operate as the first terminal, and the terminal 70 may operate as the second terminal. FIG. 11 illustrates only the two terminals 70 and 100, but the number of terminals included in the communication system 2 is not limited to this. Each terminal included in the communication system 2 can operate as either the first terminal or the second terminal.

The terminal 70 determines "measurement signal-related information" that is determined uniquely based on a random value determined randomly by the terminal 70 itself. That is, a random value is associated with "measurement signal-related information" by a predetermined rule. For example, the terminal 70 determines at least identification information on a sequence to be used as a measurement signal (e.g. the sequence number of a ZC sequence) as "measurement signal-related information." The "measurement signal-related information" may include the cyclic shift amount of the sequence. Further, the terminal 70 may determine a "transmission time" that is determined uniquely based on a random value determined randomly by the terminal 70 itself. In place of a random value, an identifier unique to each terminal (e.g. an International Mobile Equipment Identifier (IMEI) or an International Mobile Subscriber Identity (IMSI) unique to each Universal Subscriber Identification Module (USIM)) may be used.

Then, the terminal 70 transmits a measurement signal corresponding to the determined "measurement signal-related information." Here, an area A70 in FIG. 11 depicts a range in which a signal transmitted from the terminal 70 reaches with a predetermined power value or more. In FIG. 11, the terminal 100 is located in the area A70, and thus the measurement signal transmitted from the terminal 70 reaches the terminal 100.

The terminal 100 receives the measurement signal transmitted from the terminal 70. Then, the terminal 100 calculates a value associated with the received measurement signal. Specifically, the terminal 100 attempts to inversely calculate the random value. Then, the terminal 100 transmits a response signal including the calculated value and identification information on the terminal 100, to the received measurement signal.

The terminal 70 receives the response signal transmitted from the terminal 100. Here, when the random value determined by the terminal 70 itself agrees with the value included in the response signal, the terminal 70 can recognize that the response signal is a signal addressed to the terminal 70. That is, the random value is used as "address information."

When the random value determined by the terminal 70 itself agrees with the value received together with the response signal, the terminal 70 transmits "detailed service information" on the terminal 70 together with the identification information on the terminal 100. Here, the "detailed service information" on the terminal 70 includes at least a physical identifier of the terminal 70 (i.e. a physical device ID). The physical device ID is an IP address, for example. Further, the "detailed service information" on the terminal 70 may include a service type identifier (i.e. a service type ID). The service type ID is an application ID identifying an application to be executed, for example.

The terminal 100 receives the "detailed service information" and the identification information on the terminal 100 transmitted from the terminal 70. Here, by receiving the identification information on the terminal 100 together with the detailed service information transmitted from the terminal 70, the terminal 100 can recognize that the detailed service information has been transmitted to the terminal 100. That is, the identification information on the terminal 100 is used as address information. The physical identifier of the terminal 70 (i.e. identification information on the terminal 70) included in the detailed service information is used as transmission source information.

Then, the terminal 100 determines whether or not to recognize the terminal 70 as a communication partner based on the detailed service information on the terminal 70. For example, when the detailed service information on the terminal 70 includes a service type identifier, the terminal 100 determines whether or not to recognize the terminal 70 as a communication partner, based on whether or not the terminal 100 itself can execute an application corresponding to the service type identifier.

When the terminal 100 recognizes the terminal 70 as a communication partner, it transmits "detailed service information" on the terminal 100 together with the identification information on the terminal 70. The "detailed service information" on the terminal 100 includes at least a physical identifier of the terminal 100 (i.e. identification information on the terminal 100). The physical device ID is an IP address, for example. Further, the "detailed service information" on the terminal 100 may include a service type identifier (i.e. a service type ID). The service type ID is an application ID identifying an application to be executed, for example.

The terminal 70 determines whether or not to recognize the terminal 100 as a communication partner based on the detailed service information on the terminal 100. For example, when the detailed service information on the terminal 100 includes a service type identifier, the terminal 70 determines whether or not to recognize the terminal 100 as a communication partner, based on whether or not the terminal 70 itself can execute an application corresponding to the service type identifier.

When the terminal 70 recognizes the terminal 100 as a communication partner, it transmits the identification information on the terminal 100, "resource allocation information", and a data signal to the terminal 100. The resource allocation information transmitted from the terminal 70 indicates a resource to which the data signal transmitted from the terminal 70 is mapped. Therefore, when the terminal 100 receives the resource allocation information addressed to the terminal 100, it extracts the data signal mapped to the resource indicated by the resource allocation information from a received signal.

Then, the terminal 100 transmits the identification information on the terminal 70, "resource allocation information," and a data signal to the terminal 70. The resource allocation information transmitted from the terminal 100 indicates a resource to which the data signal transmitted from the terminal 100 is mapped. Therefore, when the terminal 70 receives the resource allocation information addressed to the terminal 70, it extracts the data signal mapped to the resource indicated by the resource allocation information from a received signal.

In the above manner, the terminal 70 and the terminal 100 can start D2D communication without a base station. Further, since the terminal 70 transmits a measurement signal corresponding to a random value determined randomly, the possibility that a measurement signal of the terminal 70 overlaps a measurement signal of another terminal 70 can be reduced. As a result, the terminal 70 can efficiently discover a terminal located around the terminal 70, and can efficiently perform quality measurement of a communication path between the terminal 70 and the discovered terminal.

### [Configuration Example of First Terminal]

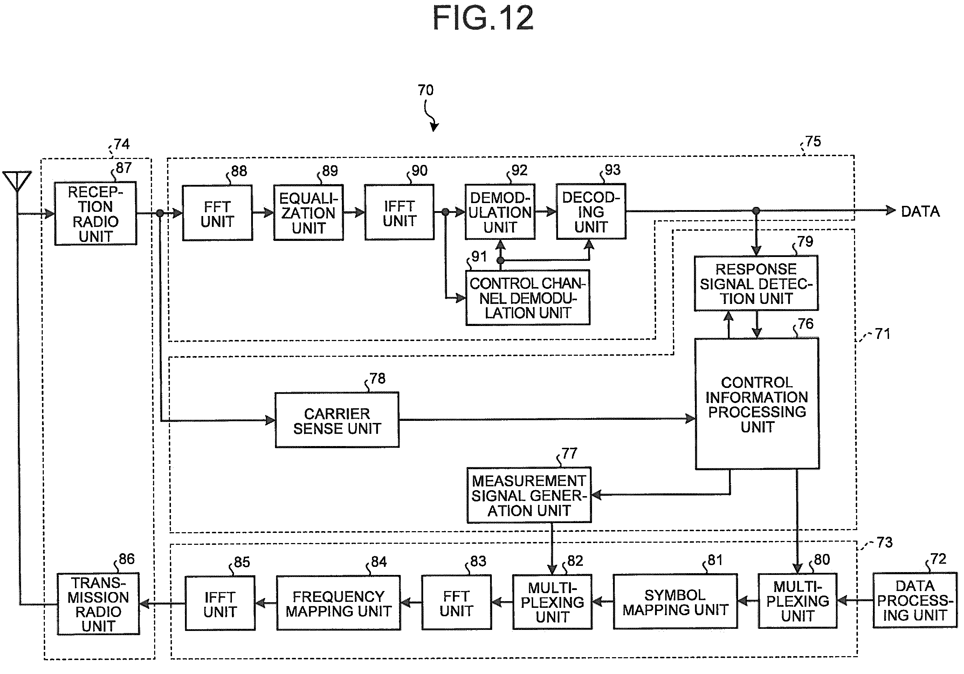

FIG. 12 is a block diagram illustrating an example of a first terminal in the third embodiment. In FIG. 12, the terminal 70 includes a control unit 71, a data processing unit 72, a transmission processing unit 73, a radio unit 74, and a reception processing unit 75. The control unit 71 includes a control information processing unit 76, a measurement signal generation unit 77, a carrier sense unit 78, and a response signal detection unit 79. The transmission processing unit 73 includes a multiplexing unit 80, a symbol mapping unit 81, a multiplexing unit 82, an FFT unit 83, a frequency mapping unit 84, and an IFFT unit 85. The radio unit 74 includes a transmission radio unit 86 and a reception radio unit 87. The reception processing unit 75 includes an FFT unit 88, an equalization unit 89, an IFFT unit 90, a control channel demodulation unit 91, a demodulation unit 92, and a decoding unit 93.

The control information processing unit 76 determines a random value randomly, and determines a transmission time and a measurement signal of the terminal 70 itself, based on the determined random value. Then, the control information processing unit 76 causes the measurement signal generation unit 77 to generate the determined measurement signal, and causes the measurement signal to be output at the determined transmission time.

When a response signal addressed to the terminal 70 transmitted from the terminal 100 in response to the transmitted measurement signal is detected by the response signal detection unit 79, the control information processing unit 76 outputs, to the multiplexing unit 80, detailed service information on the terminal 70 together with identification information on the terminal 100 included in the response signal. When radio resource information is included in the response signal, the detailed service information on the terminal 70 may be mapped to a resource indicated by the radio resource information and transmitted together with the identification information on the terminal 100. When radio resource information is not included in the response signal, the detailed service information on the terminal 70 may be transmitted at a timing when a power value detected by the carrier sense unit 78 is lower than or equal to a predetermined value, that is, a timing when transmission by a terminal other than the terminal 70 is not performed. Specifically, the detailed information on the terminal 70 may be transmitted by the Carrier Sense Multiple Access/Collision Avoidance (CSMA/CA) scheme. As described above, the detailed service information on the terminal 70 includes at least a physical identifier of the terminal 70 (i.e. a physical device ID). The "detailed service information" on the terminal 70 may also include a service type identifier (i.e. a service type ID). Further, the detailed service information on the terminal 70 may include information on a radio resource to be used for transmission of detailed service information by the terminal 100, and information on the transmission power of the terminal 70.

When detailed service information on the terminal 100 addressed to the terminal 70 transmitted from the terminal 100 in response to the transmitted detailed service information is detected by the response signal detection unit 79, the control information processing unit 76 determines whether or not to recognize the terminal 100 as a communication partner. When the control information processing unit 76 recognizes the terminal 100 as a communication partner, it outputs the identification information on the terminal 100 and resource allocation information to the multiplexing unit 80. Details of a measurement signal will be described in detail below.

The carrier sense unit 78 performs carrier sense processing, based on a received signal output from the reception radio unit 87. Specifically, the carrier sense unit 78 measures the received power of the received signal, and outputs a measurement result to the control information processing unit 76.

The response signal detection unit 79 receives received data output from the decoding unit 93, and detects a response signal and detailed service information transmitted from the terminal 100 to the terminal 70. Then, the response signal detection unit 79 outputs the detected response signal and detailed service information to the control information processing unit 76. When a value included in the response signal agrees with a random value determined by the control information processing unit 76, the response signal detection unit 79 recognizes that the response signal is addressed to the terminal 70. When the identification information on the terminal 70 is received together with detailed service information, the response signal detection unit 79 recognizes that the detailed service information is addressed to the terminal 70.

The data processing unit 72 outputs user data to the multiplexing unit 80.

The multiplexing unit 80 forms a multiplexed signal by mapping the user data received from the data processing unit 72 and the various types of information received from the control information processing unit 76 to a predetermined resource, and outputs the formed multiplexed signal to the symbol mapping unit 81.

The symbol mapping unit 81 maps the multiplexed signal received from the multiplexing unit 80 to symbols, and outputs a modulated signal obtained to the multiplexing unit 82.

The multiplexing unit 82 multiplexes the modulated signal received from the symbol mapping unit 81, the measurement signal received from the measurement signal generation unit 77, a pilot signal, and a synchronization signal, for example, and outputs a multiplexed signal to the FFT unit 83.

The FFT unit 83 performs fast Fourier transform processing on the multiplexed signal received from the multiplexing unit 82, and outputs the multiplexed signal after the fast Fourier transform processing to the frequency mapping unit 84.

The frequency mapping unit 84 maps the multiplexed signal received from the FFT unit 83 to a predetermined frequency, and outputs a transmission signal obtained to the IFFT unit 85.

The IFFT unit 85 performs inverse fast Fourier transform processing on the transmission signal received from the frequency mapping unit 84 to form an OFDM signal, and outputs the formed OFDM signal to the transmission radio unit 86.

The transmission radio unit 86 performs predetermined transmission radio processing, such as digital-to-analog conversion or up-conversion, on the OFDM signal received from the IFFT unit 85 to form a radio signal, and transmits the formed radio signal via an antenna.

The reception radio unit 87 performs predetermined reception radio processing, such as down-conversion or analog-to-digital conversion, on a received signal received via the antenna, and outputs the received signal after the reception radio processing to the FFT unit 88 and the carrier sense unit 78.

The FFT unit 88 performs fast Fourier transform processing on the received signal after the reception radio processing, and outputs the received signal after the fast Fourier transform processing to the equalization unit 89.

The equalization unit 89 performs frequency equalization processing on the received signal after the fast Fourier transform processing received from the FFT unit 88, and outputs the received signal after the frequency equalization processing to the IFFT unit 90.

The IFFT unit 90 performs inverse fast Fourier transform processing on the received signal after the frequency equalization processing received from the equalization unit 89, and outputs the received signal after the inverse fast Fourier transform processing to the control channel demodulation unit 91 and the demodulation unit 92.

The demodulation unit 92 receives resource allocation information from the control channel demodulation unit 91, demodulates a signal mapped to a resource corresponding to the resource allocation information among received signals received from the IFFT unit 90, and outputs the demodulated received signal to the decoding unit 93.

The decoding unit 93 receives resource allocation information from the control channel demodulation unit 91, decodes a signal mapped to a resource corresponding to the resource allocation information among received signals received from the demodulation unit 92, and outputs received data obtained.

The control channel demodulation unit 91 searches for control information addressed to the terminal 70 among received signals received from the IFFT unit 90. When resource allocation information addressed to the terminal 70 is found, the control channel demodulation unit 91 outputs the resource allocation information to the demodulation unit 92 and the decoding unit 93.

### [Configuration Example of Second Terminal]

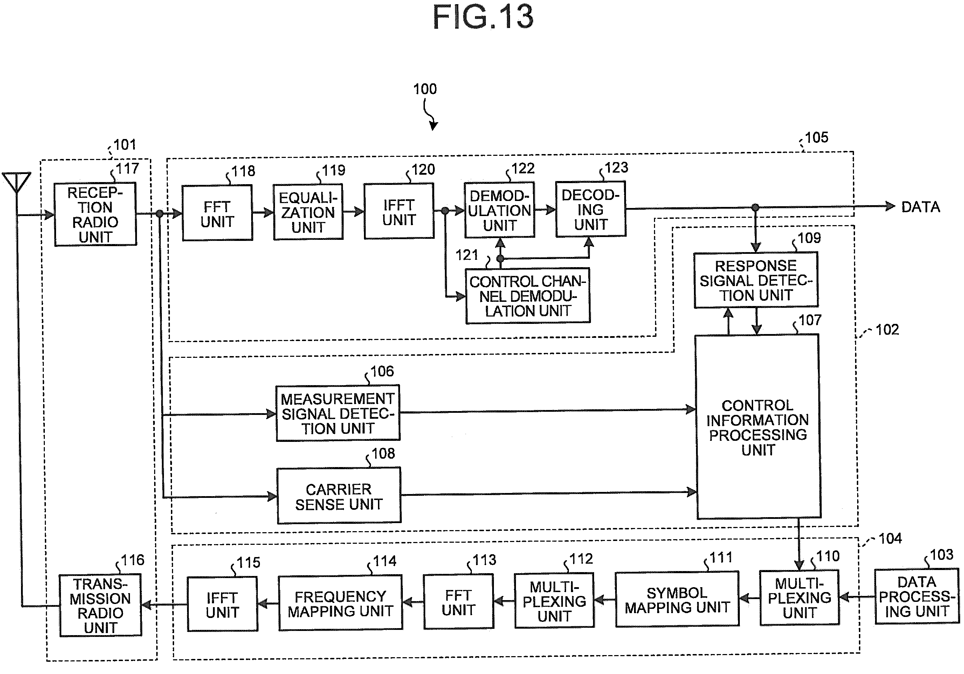

FIG. 13 is a block diagram illustrating an example of a second terminal in the third embodiment. In FIG. 13, the terminal 100 includes a radio unit 101, a control unit 102, a data processing unit 103, a transmission processing unit 104, and a reception processing unit 105. The control unit 102 includes a measurement signal detection unit 106, a control information processing unit 107, a carrier sense unit 108, and a response signal detection unit 109. The transmission processing unit 104 includes a multiplexing unit 110, a symbol mapping unit 111, a multiplexing unit 112, an FFT unit 113, a frequency mapping unit 114, and an IFFT unit 115. The radio unit 101 includes a transmission radio unit 116 and a reception radio unit 117. The reception processing unit 105 includes an FFT unit 118, an equalization unit 119, an IFFT unit 120, a control channel demodulation unit 121, a demodulation unit 122, and a decoding unit 123.

The measurement signal detection unit 106 detects a measurement signal among received signals received from the reception radio unit 117. The measurement signal detection unit 106 detects identification information on and the cyclic shift amount of the measurement signal, for example. Then, the measurement signal detection unit 106 outputs a detection result to the control information processing unit 107.

The control information processing unit 107 calculates a value corresponding to the detected measurement signal, based on the detection result received from the measurement signal detection unit 106. Specifically, the control information processing unit 107 attempts to inversely calculate the above-described random value. Then, the control information processing unit 107 outputs, to the multiplexing unit 110, a response signal including the calculated value and the identification information on the terminal 100, to the received measurement signal. The response signal may be transmitted at a time when a predetermined period of time has elapsed since the timing when the measurement signal was received. Alternatively, the response signal may be transmitted at a timing when a power value detected by the carrier sense unit 108 is lower than or equal to a predetermined value, that is, a timing when transmission by a terminal other than the terminal 100 is not performed. Specifically, the response signal may be transmitted by the Carrier Sense Multiple Access/Collision Avoidance (CSMA/CA) scheme.

When detailed service information on the terminal 70 addressed to the terminal 100 transmitted from the terminal 70 in response to the transmitted response signal is detected by the response signal detection unit 109, the control information processing unit 107 determines whether or not to recognize the terminal 70 as a communication partner. When the control information processing unit 107 recognizes the terminal 70 as a communication partner, it outputs the identification information on the terminal 70 and detailed service information on the terminal 100 to the multiplexing unit 110. When radio resource information is included in the detailed service information on the terminal 70, the detailed service information on the terminal 100 may be mapped to a resource indicated by the radio resource information, to be transmitted together with the identification information on the terminal 70. When radio resource information is not included in the detailed service information on the terminal 70, the detailed service information on the terminal 100 may be transmitted at a timing when a power value detected by the carrier sense unit 108 is lower than or equal to a predetermined value, that is, a timing when transmission by a terminal other than the terminal 100 is not performed. Specifically, the detailed information on the terminal 100 may be transmitted by the CSMA/CA scheme. As described above, the detailed service information on the terminal 100 includes at least a physical identifier of the terminal 100 (i.e. a physical device ID). The "detailed service information" on the terminal 100 may include a service type identifier (i.e. a service type ID). Further, the detailed service information on the terminal 100 may include information on a radio resource to be used for transmission of detailed service information by the terminal 70 and information on the transmission power of the terminal 100.

When the control information processing unit 107 receives resource allocation information and data from the terminal 70, it outputs the identification information on the terminal 70 and the resource allocation information to the multiplexing unit 110.

The carrier sense unit 108 performs carrier sense processing, based on a received signal output from the reception radio unit 117. Specifically, the carrier sense unit 108 measures the received power of the received signal, and outputs a measurement result to the control information processing unit 107.

The response signal detection unit 109 receives received data output from the decoding unit 123, and detects detailed service information transmitted from the terminal 70 to the terminal 100. Then, the response signal detection unit 109 outputs the detected detailed service information to the control information processing unit 107. When the identification information on the terminal 100 is received together with the detailed service information, the response signal detection unit 109 recognizes that the detailed service information is addressed to the terminal 100.

The data processing unit 103 outputs user data to the multiplexing unit 110.

The multiplexing unit 110 forms a multiplexed signal by mapping the user data received from the data processing unit 103 and the various types of information received from the control information processing unit 107 to a predetermined resource, and outputs the formed multiplexed signal to the symbol mapping unit 111.

The symbol mapping unit 111 maps the multiplexed signal received from the multiplexing unit 110 to symbols, and outputs a modulated signal obtained to the multiplexing unit 112.

The multiplexing unit 112 multiplexes the modulated signal received from the symbol mapping unit 111, a pilot signal, and a synchronization signal, for example, and outputs a multiplexed signal to the FFT unit 113.

The FFT unit 113 performs fast Fourier transform processing on the multiplexed signal received from the multiplexing unit 112, and outputs the multiplexed signal after the fast Fourier transform processing to the frequency mapping unit 114.

The frequency mapping unit 114 maps the multiplexed signal received from the FFT unit 113 to a predetermined frequency, and outputs a transmission signal obtained to the IFFT unit 115.

The IFFT unit 115 performs inverse fast Fourier transform processing on the transmission signal received from the frequency mapping unit 114 to form an OFDM signal, and outputs the formed OFDM signal to the transmission radio unit 116.

The transmission radio unit 116 performs predetermined transmission radio processing, such as digital-to-analog conversion or up-conversion, on the OFDM signal received from the IFFT unit 115 to form a radio signal, and transmits the formed radio signal via an antenna.

The reception radio unit 117 performs predetermined reception radio processing, such as down-conversion or analog-to-digital conversion, on a received signal received via the antenna, and outputs the received signal after the reception radio processing to the FFT unit 118, the measurement signal detection unit 106, and the carrier sense unit 108.

The FFT unit 118 performs fast Fourier transform processing on the received signal after the reception radio processing, and outputs the received signal after the fast Fourier transform processing to the equalization unit 119.

The equalization unit 119 performs frequency equalization processing on the received signal after the fast Fourier transform processing received from the FFT unit 118, and outputs the received signal after the frequency equalization processing to the IFFT unit 120.

The IFFT unit 120 performs inverse fast Fourier transform processing on the received signal after the frequency equalization processing received from the equalization unit 119, and outputs the received signal after the inverse fast Fourier transform processing to the control channel demodulation unit 121 and the demodulation unit 122.

The demodulation unit 122 receives resource allocation information from the control channel demodulation unit 121, demodulates a signal mapped to a resource corresponding to the resource allocation information among received signals received from the IFFT unit 120, and outputs the demodulated received signal to the decoding unit 123.

The decoding unit 123 receives resource allocation information from the control channel demodulation unit 121, decodes a signal mapped to a resource corresponding to the resource allocation information among received signals received from the demodulation unit 122, and outputs received data obtained.

The control channel demodulation unit 121 searches for control information addressed to the terminal 100 among received signals received from the IFFT unit 120. When resource allocation information addressed to the terminal 100 is found, the control channel demodulation unit 121 outputs the resource allocation information to the demodulation unit 122 and the decoding unit 123.

### [Operation Example of Communication System]

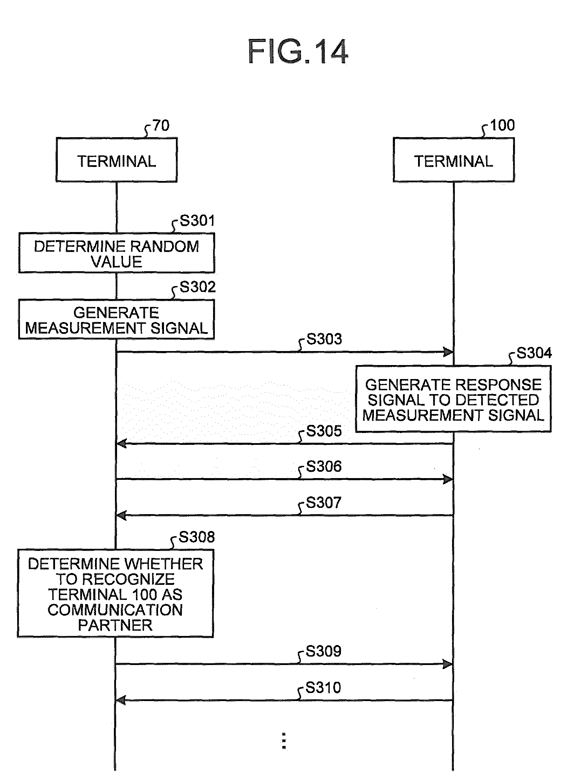

FIG. 14 is a diagram for explaining an example of a processing operation of the communication system in the third embodiment.

The control information processing unit 76 in the terminal 70 determines a random value randomly (step S301). For example, the control information processing unit 76 determines random value X1 and random value X2. Random value X1 has twelve bits, for example. Nine bits of the twelve bits of random value X1 correspond to the sequence number of one of 839 different ZC sequences, and the remaining three bits correspond to one of eight different cyclic shift amounts. Random value X2 has nine bits, and corresponds to one of transmission sub-frame patterns.

The terminal 70 generates a measurement signal corresponding to random value X1 (step S302), and transmits the generated measurement signal according to the transmission sub-frame pattern (step S303). The measurement signal may be transmitted on a channel for the measurement signal.

The measurement signal detection unit 106 in the terminal 100 detects the measurement signal transmitted from the terminal 70. The detection processing may be executed on the channel for the measurement signal.

Then, the control information processing unit 107 calculates a value corresponding to the detected measurement signal, based on a detection result received from the measurement signal detection unit 106. Specifically, the control information processing unit 107 attempts to inversely calculate random value X1.

Then, the control information processing unit 107 generates a response signal including the calculated value and identification information on the terminal 100, to the received measurement signal (step S304), and causes the transmission processing unit 104 to transmit the generated response signal (step S305). The response signal may be transmitted on the channel for the measurement signal, or may be transmitted on a different channel.

The response signal detection unit 79 in the terminal 70 detects the response signal transmitted from the terminal 100 to the terminal 70. The detection processing may be executed on the channel for the measurement signal, or may be executed on the different channel. Then, the control information processing unit 76 causes the transmission processing unit 73 to transmit detailed service information on the terminal 70 together with the identification information on the terminal 100 included in the response signal (step S306).

The response signal detection unit 109 in the terminal 100 detects the detailed service information transmitted from the terminal 70 to the terminal 100. Then, the control information processing unit 107 causes the transmission processing unit 104 to transmit the identification information on the terminal 70 and detailed service information on the terminal 100 (step S307).

The control information processing unit 76 in the terminal 70 determines whether to recognize the terminal 100 as a communication partner (step S308). When the control information processing unit 76 determines the terminal 100 as a communication partner, it causes the transmission processing unit 73 to transmit the identification information on the terminal 100 and resource allocation information (step S309).

When the control information processing unit 107 in the terminal 100 receives the resource allocation information and data from the terminal 70, it causes the transmission processing unit 104 to transmit the identification information on the terminal 70 and resource allocation information (step S310).

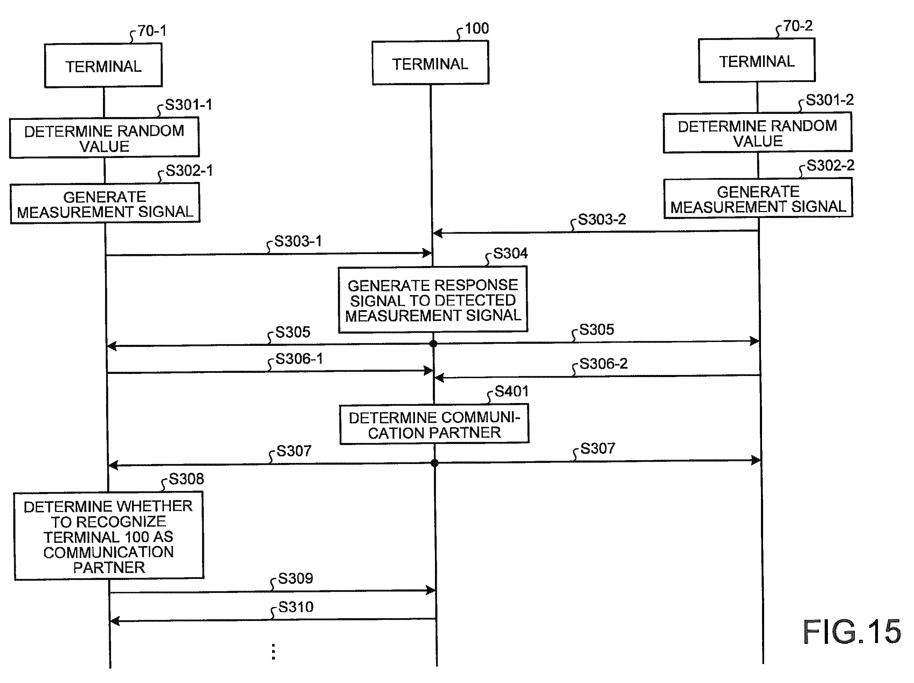

FIG. 15 is a diagram for explaining an example of a processing operation of a communication system in the third embodiment. In particular, FIG. 15 illustrates a processing operation in a case where the same measurement signals are transmitted from a plurality of terminals 70 at the same time.

As illustrated in FIG. 15, the terminal 100 receives measurement signals generated and transmitted at the same time in terminals 70-1 and -2 (steps S301-1 and -2, steps S302-1 and -2, steps S303-1 and -2).

The control information processing unit 107 generates response signals including values calculated based on the detected measurement signals and identification information on the terminal 100, to the detected measurement signals (step S304), and causes the transmission processing unit 104 to transmit the generated response signals (step S305).

The response signal detection units 79 in the terminals 70-1 and -2 detect the response signals transmitted from the terminal 100 to the terminals 70-1 and -2. Then, the control information processing units 76 cause the transmission processing units 73 to transmit detailed service information on the terminals 70-1 and -2 together with the identification information on the terminal 100 included in the response signals (steps S306-1 and -2).

The control information processing unit 107 in the terminal 100 selects a communication partner from the terminals 70-1 and -2 (step S401). Here, the terminal 70-1 is selected as a communication partner.

The control information processing unit 107 causes the transmission processing unit 104 to transmit identification information on the terminal 70-1 selected as a communication partner and detailed service information on the terminal 100 (step S307). While the detailed service information on the terminal 100 is transmitted together with the terminal 70-1, it is not transmitted together with the terminal 70-2. Thus the terminal 70-2 can recognize that detailed service information addressed to the terminal 70-2 is not transmitted.

The control information processing unit 76 in the terminal 70-1 determines whether to recognize the terminal 100 as a communication partner (step S308). When the control information processing unit 76 determines the terminal 100 as a communication partner, it causes the transmission processing unit 73 to transmit the identification information on the terminal 100 and resource allocation information (step S309).

When the control information processing unit 107 in the terminal 100 receives the resource allocation information and data from the terminal 70-1, it causes the transmission processing unit 104 to transmit the identification information on the terminal 70-1 and resource allocation information (step S310).

As above, according to this embodiment, the control unit 71 in the terminal 70 determines information on a measurement signal that is uniquely determined based on a random value determined randomly by the terminal 70 itself or the value of an identifier uniquely assigned to the terminal 70 (e.g. an IMEI or an IMSI). Then, the transmission processing unit 73 transmits the measurement signal determined by the control unit 71.

This configuration of the terminal 70 can reduce the possibility that a measurement signal of the terminal 70 overlaps a measurement signal of another terminal 70 because a measurement signal corresponding to a random value determined randomly by the terminal 70, or the value of an identifier uniquely assigned to the terminal 70 is transmitted. As a result, the terminal 70 can efficiently discover a terminal located around the terminal 70, and can efficiently perform quality measurement of a communication path between the terminal 70 and the discovered terminal.

The control unit 71 determines at least identification information on a sequence to be used as a measurement signal as information on a measurement signal. For example, as information on a measurement signal, the control unit 71 determines identification information on a sequence to be used as a measurement signal, a cyclic shift amount of the sequence, and a sub-frame pattern in which the measurement signal is transmitted.

The reception processing unit 75 in the terminal 70 receives a response signal transmitted from the terminal 100 in response to a measurement signal transmitted, and including a value inversely calculated based on the measurement signal received by the terminal 100 and identification information on the terminal 100. When a response signal is received by the reception processing unit 75, the transmission processing unit 73 transmits detailed service information including at least a physical identifier of the terminal 70 together with the identification information on the terminal 100.

The measurement signal detection unit 106 in the terminal 100 detects a measurement signal transmitted from the terminal 100, and the control information processing unit 107 calculates a value associated with the measurement signal detected by the measurement signal detection unit 106. Then, the transmission processing unit 104 transmits a response signal including the value calculated by the control information processing unit 107 and the identification information on the terminal 100, to the measurement signal detected by the measurement signal detection unit 106.

This configuration of the terminal 100 allows the terminal 70 to determine whether or not the response signal is addressed to the terminal 70 based on the random value.

The reception processing unit 105 in the terminal 100 receives detailed service information transmitted from the terminal 70 as a response to the response signal, and including a physical identifier of the terminal 70. Then, the transmission processing unit 104 transmits detailed service information on the terminal 100 together with the physical identifier of the terminal 70.

### [Fourth Embodiment]

In the third embodiment, it is assumed that synchronization is established between terminals. In contrast, in the fourth embodiment, it is assumed that synchronization is not established between terminals. Specifically, in the fourth embodiment, one terminal and another terminal are asynchronous.

### [Configuration Example of First Terminal]

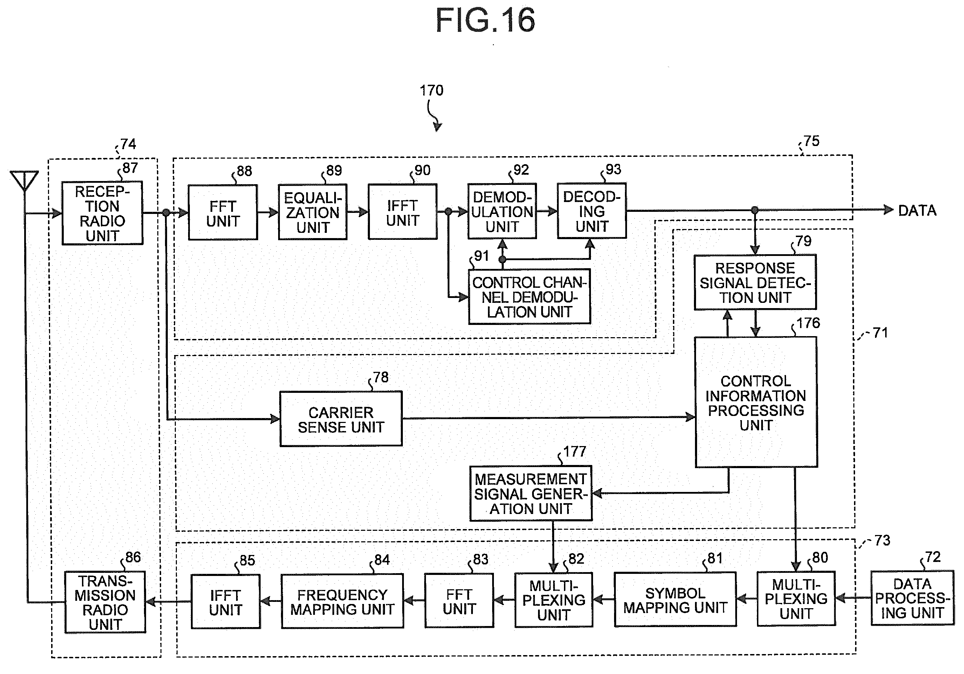

FIG. 16 is a block diagram illustrating an example of a first terminal in the fourth embodiment. In FIG. 16, a terminal 170 includes a control information processing unit 176 and a measurement signal generation unit 177.

The control information processing unit 176 determines a random value randomly, and determines a measurement signal of the terminal 70 itself, based on the determined random value. Then, the control information processing unit 176 causes the measurement signal generation unit 177 to generate the determined measurement signal, and causes the measurement signal to be output at a time when a terminal other than the terminal 170 does not transmit. Specifically, the measurement signal is transmitted by the asynchronous CSMA/CA procedure. The measurement signal is transmitted on a preset channel for the measurement signal.

Here, the control information processing unit 176 does not determine random value X2, but determines random value X1. That is, since the fourth embodiment is premised on asynchronous, a transmission sub-frame pattern is not used. Random value X1 in the fourth embodiment has ten bits, for example. Eight bits of the ten bits of random value X1 correspond to the sequence number of one of 419 different ZC sequences, and the remaining two bits correspond to one of four different cyclic shift amounts.

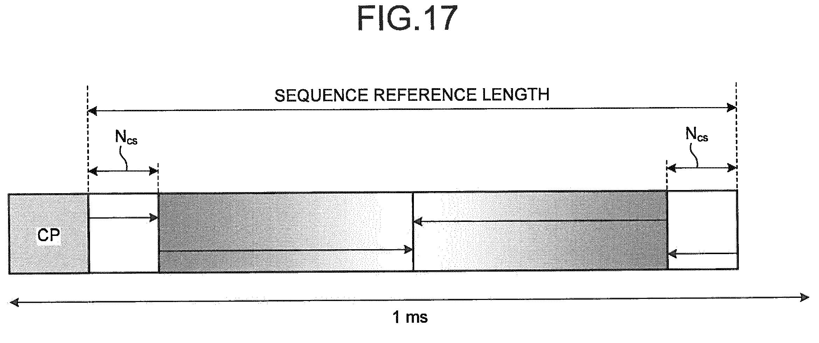

Then, the measurement signal generation unit 177 generates a measurement signal corresponding to random value X1 determined by the control information processing unit 176. Specifically, the measurement signal generation unit 177 first generates a first sequence in which the sequence of the sequence number corresponding to random value X1 (here, in particular, a sequence having half the length of a "sequence reference length") is shifted by the cyclic shift amount corresponding to random value X1. Then, the measurement signal generation unit 177 generates a second sequence in which the first sequence is time-reversed. Then, the measurement signal generation unit 177 generates a measurement signal by connecting the first sequence and the second sequence. FIG. 17 is a diagram illustrating an example of a measurement signal in the fourth embodiment. In FIG. 17, a sequence reference length depicts the length of a measurement signal to be transmitted. In the third embodiment, the sequence corresponding to random value X1 has the same length as that of the sequence reference length. In FIG. 17, N_{cs} depicts the cyclic shift amount. In FIG. 17, CP depicts a cyclic prefix.

When a response signal addressed to the terminal 170 transmitted from a terminal 200 in response to a measurement signal transmitted is detected by a response signal detection unit 79, the control information processing unit 176 outputs, to a multiplexing unit 80, detailed service information on the terminal 170 together with identification information on the terminal 200 included in the response signal. The detailed service information on the terminal 70 is transmitted at a timing when a power value detected by a carrier sense unit 78 is lower than or equal to a predetermined value, that is, a timing when transmission by a terminal other than the terminal 170 is not performed. Specifically, the detailed information on the terminal 170 is transmitted by the asynchronous CSMA/CA procedure. The detailed service information on the terminal 170 includes at least a physical identifier of the terminal 170 (i.e. a physical device ID). The "detailed service information" on the terminal 170 may include a service type identifier (i.e. a service type ID). Further, the detailed service information on the terminal 170 may include information on a radio resource to be used for transmission of detailed service information by the terminal 200, and information on the transmission power of the terminal 170. The response signal may be transmitted on a preset channel for the measurement signal, or may be transmitted on a different channel. Therefore, detection processing of a response signal can be executed on a channel on which the response signal is to be transmitted.

When the detailed service information on the terminal 200 addressed to the terminal 170 transmitted from the terminal 200 in response to the transmitted detailed service information is detected by the response signal detection unit 79, the control information processing unit 176 determines whether or not to recognize the terminal 200 as a communication partner. When the control information processing unit 176 recognizes the terminal 200 as a communication partner, it outputs the identification information on the terminal 200 and resource allocation information to the multiplexing unit 80.

### <Modification>

Random value X1 in the fourth embodiment may have nine bits, for example. This random value X1 corresponds to one of 839 different sequences having the sequence reference length. That is, in this modification, a sequence used as a measurement signal is not cyclically shifted.

### [Configuration Example of Second Terminal]

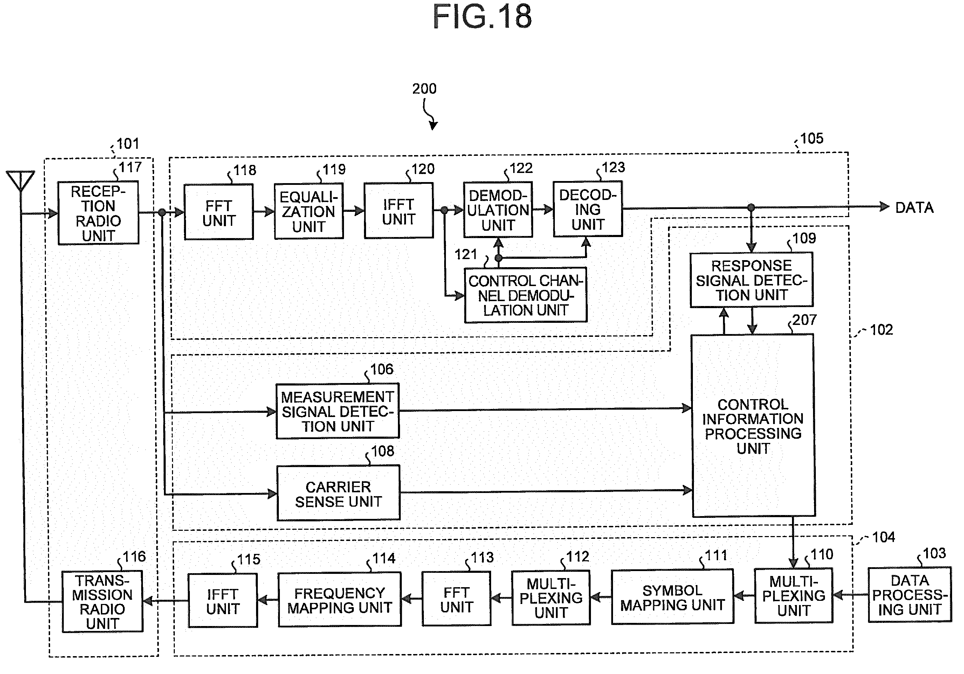

FIG. 18 is a block diagram illustrating an example of a second terminal in the fourth embodiment. In FIG. 18, the terminal 200 includes a control information processing unit 207.

The control information processing unit 207 calculates a value corresponding to a measurement signal detected, based on a detection result received from a measurement signal detection unit 106. Specifically, the control information processing unit 207 attempts to inversely calculate the above-described random value. Then, the control information processing unit 207 outputs, to a multiplexing unit 110, a response signal including the calculated value and identification information on the terminal 200, to the received measurement signal. The response signal is transmitted at a timing when a power value detected by a carrier sense unit 108 is lower than or equal to a predetermined value, that is, a timing when transmission by a terminal other than the terminal 200 is not performed. Specifically, the response signal is transmitted by the asynchronous CSMA/CA procedure. The response signal may be transmitted on a preset channel for the measurement signal, or may be transmitted on a different channel.

When detailed service information on the terminal 170 addressed to the terminal 200 transmitted from the terminal 170 in response to the transmitted response signal is detected by a response signal detection unit 109, the control information processing unit 207 determines whether or not to recognize the terminal 170 as a communication partner. When the control information processing unit 207 recognizes the terminal 170 as a communication partner, it outputs identification information on the terminal 170 and detailed service information on the terminal 200 to the multiplexing unit 110. The detailed service information on the terminal 200 is transmitted by the asynchronous CSMA/CA procedure. The detailed service information on the terminal 200 includes at least a physical identifier of the terminal 200 (i.e. a physical device ID). The "detailed service information" on the terminal 200 may include a service type identifier (i.e. a service type ID). Further, the detailed service information on the terminal 200 may include information on a radio resource to be used for transmission of detailed service information by the terminal 170 and information on the transmission power of the terminal 200.

When the control information processing unit 207 receives resource allocation information and data from the terminal 170, it outputs the identification information on the terminal 170 and resource allocation information to the multiplexing unit 110.

As above, according to this embodiment, the transmission processing unit 73 in the terminal 170 transmits a measurement signal determined by the control unit 71. The measurement signal includes a first sequence used as a measurement signal and a second sequence in which the first sequence is time-reversed.

This configuration of the terminal 170 allows an increase in the identification performance (i.e. the cross-correlation property) of a measurement signal even when synchronization is not established between terminals.

### [Other Embodiments]

Components of each part illustrated in the first and second embodiments do not necessarily need to be configured physically as illustrated. That is, specific forms of distribution/integration in each part are not limited to those illustrated. All of or part of those may be configured to be distributed/integrated functionally or physically in desired units, according to various kinds of load, use statuses, or the like.

Further, all of or desired part of various processing functions performed in each device may be executed on a central processing unit (CPU) (or a microcomputer such as a micro processing unit (MPU) or a micro controller unit (MCU)). Moreover, all of or desired part of the various processing functions may be executed on a program analyzed and executed on a CPU (or a microcomputer such as a MPU or a MCU), or on hardware by wired logic.

Base stations and terminals in the first to fourth embodiments can be implemented by the following hardware configurations, for example.

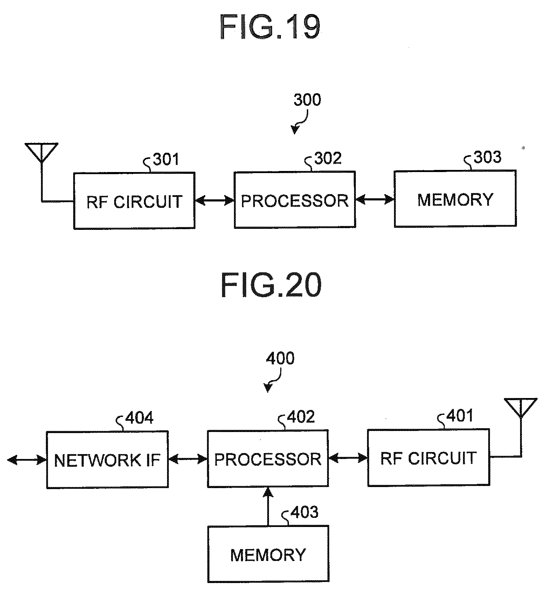

FIG. 19 is a diagram illustrating a hardware configuration example of a terminal. As illustrated in FIG. 19, a terminal 300 includes a radio frequency (RF) circuit 301, a processor 302, and memory 303. The terminal 10, the terminal 40, the terminal 70, the terminal 100, the terminal 170, and the terminal 200 each have a hardware configuration as illustrated in FIG. 19.

Examples of the processor 302 include a central processing unit (CPU), a digital signal processor (DSP), and a field programmable gate array (FPGA). Examples of the memory 303 include random access memory (RAM) such as synchronous dynamic random access memory (SDRAM), read-only memory (ROM), and flash memory.

Various processing functions performed in terminals in the first to fourth embodiments may be implemented by executing programs stored in various types of memory such as a non-volatile storage medium on a processor included in an amplifying device. Specifically, programs corresponding to various types of processing executed by the reception processing unit 12, 42, 75, or 105, the control unit 13, 43, 71, or 102, the data processing unit 14, 44, 72, or 103, and the transmission processing unit 15, 45, 73, or 104 may be recorded in the memory 303, and each of the programs may be executed on the processor 302. The various types of processing executed by the reception processing unit 12, 42, 75, or 105, the control unit 13, 43, 71, or 102, the data processing unit 14, 44, 72, or 103, and the transmission processing unit 15, 45, 73, or 104 may be shared and executed by a plurality of processors such as a baseband CPU and an application CPU. The radio unit 11, 41, 74, or 101 is implemented by the RF circuit 301.

FIG. 20 is a diagram illustrating a hardware configuration example of a base station. As illustrated in FIG. 20, a base station 400 includes an RF circuit 401, a processor 402, memory 403, and a network interface (IF) 404. Examples of the processor 402 include a CPU, a DSP, and an FPGA. Examples of the memory 403 include RAM such as SDRAM, ROM, and flash memory.

Various processing functions performed in a base station in the first and second embodiments may be implemented by executing programs stored in various types of memory such as a non-volatile storage medium on a processor included in an amplifying device. Specifically, programs corresponding to various types of processing executed by the reception processing unit 52, the control unit 53, and the transmission processing unit 54 may be recorded in the memory 403, and each of the programs may be executed on the processor 402. The radio unit 51 is implemented by the RF circuit 401.

Here, the base station 400 has been described as a one-body device, but is not limited to this. For example, the base station 400 may be configured with two separate devices, a radio device and a control device. In this case, for example, the RF circuit 401 is provided in the radio device, and the processor 402, the memory 403, and the network IF 404 are provided in the control device.

### Reference Signs List

### [Explanation of Reference]

1, 2 communication system
10, 40, 70, 100, 170, 200 terminal
11, 41, 51, 74, 101 radio unit
12, 42, 52, 75, 105 reception processing unit
13,43, 53, 71, 102 control unit
14, 44, 72, 103 data processing unit
15, 45, 54, 73, 104 transmission processing unit
16, 55, 87, 117 reception radio unit
17, 28, 56, 83, 88, 113, 118 FFT unit
18, 57, 92, 122 demodulation unit
19, 58, 93, 123 decoding unit
20, 91, 121 control channel demodulation unit
21 cell search unit
22, 76, 107, 176, 207 control information processing unit
23, 106 measurement signal detection unit
24, 77, 177 measurement signal generation unit
25, 27, 66, 80, 82, 110, 112 multiplexing unit
26, 81, 111 symbol mapping unit
29, 84, 114 frequency mapping unit
30, 67, 85, 90, 115, 120 IFFT unit
31, 68, 86, 116 transmission radio unit
50 base station
59 demultiplexing unit
60 radio resource control unit
61 MAC control unit
62 packet generation unit
63 MAC scheduling unit
64 encoding unit
65 modulation unit
78, 108 carrier sense unit
79, 109 response signal detection unit
89, 119 equalization unit

## Claims

1. A communication system comprising:
a terminal capable of direct terminal-to-terminal communication; and
a base station configured to communicate with the terminal,
the base station comprising:
a receiving unit configured to receive a report on a measurement signal from another terminal detected by the terminal at a time other than a transmission time of the terminal; and
a controlling unit configured to transmit, to the terminal, first allocation information on a transmission time for the terminal to transmit a measurement signal, form second allocation information, using the report on a measurement signal detected by the terminal at a time other than the transmission time indicated by the first allocation information, and transmit the formed second allocation information to the terminal,
the terminal comprising:
a receiving unit configured to receive allocation information transmitted from the base station;
a detecting unit configured to detect a measurement signal transmitted by another terminal at a time other than a transmission time indicated by the received allocation information; and
a transmitting unit configured to transmit a measurement signal at the transmission time indicated by the received allocation information, and transmit a report on the measurement signal detected by the detecting unit to the base station.

2. A base station comprising:
a receiving unit configured to receive, from a terminal capable of direct terminal-to-terminal communication, a report on a measurement signal from another terminal detected by the terminal at a time other than a transmission time of the terminal; and
a controlling unit configured to transmit, to the terminal, first allocation information on a transmission time for the terminal to transmit a measurement signal, form second allocation information, using the report on a measurement signal detected by the terminal at a time other than the transmission time indicated by the first allocation information, and transmit the formed second allocation information to the terminal.

3. The base station according to claim 2, wherein the controlling unit transmits an instruction to transmit a measurement signal to other terminals that do not perform direct terminal-to-terminal communication.

4. A terminal capable of direct terminal-to-terminal communication, the terminal comprising:
a receiving unit configured to receive allocation information transmitted from a base station;
a detecting unit configured to detect a measurement signal transmitted by another terminal at a time other than a transmission time indicated by the received allocation information; and
a transmitting unit configured to transmit a measurement signal at the transmission time indicated by the received allocation information, and transmit a report on the measurement signal detected by the detecting unit to the base station.

5. The terminal according to claim 4, wherein in a first processing interval before a second processing interval in which the measurement signal is transmitted at the transmission time indicated by the received allocation information, the transmitting unit transmits a measurement signal at a transmission time uniquely determined based on information determined for each terminal.

6. The terminal according to claim 4, wherein in a first processing interval before a second processing interval in which the measurement signal is transmitted at the transmission time indicated by the received allocation information, the transmitting unit transmits, as the measurement signal, a sequence determined uniquely based on information determined for each terminal.

7. The terminal according to claim 5 or 6, wherein the information determined for each terminal is cell identification information on the base station and terminal identification information assigned from the base station.

8. The terminal according to claim 5 or 6, wherein the information determined for each terminal is numerical information selected randomly for each terminal.

9. The terminal according to claim 4, wherein the detecting unit detects the level of interference from another terminal that does not perform direct terminal-to-terminal communication, based on a measurement signal transmitted from the other terminal.

10. A control method in a base station for controlling quality measurement of communication paths between terminals capable of direct communication with each other, the method comprising:
transmitting, to a terminal, first allocation information on a transmission time for the terminal to transmit a measurement signal;
receiving a report on a measurement signal from another terminal detected by the terminal at a time other than the transmission time of the terminal; and
forming second allocation information, using the report, and transmitting the formed second allocation information to the terminal.

11. A terminal capable of direct terminal-to-terminal communication, the terminal comprising:
a controlling unit configured to determine information on a measurement signal, which is determined uniquely based on a random value determined randomly by the terminal itself or the value of an identifier assigned uniquely to the terminal; and
a transmitting unit configured to transmit a measurement signal corresponding to the determined information.

12. The terminal according to claim 11, wherein the controlling unit determines at least identification information on a sequence to be used as the measurement signal, as information on the measurement signal.

13. The terminal according to claim 12, wherein the measurement signal transmitted from the transmitting unit includes the sequence and a sequence in which the former sequence is time-reversed.

14. The terminal according to any one of claims 11 to 13, further comprising:
a receiving unit configured to receive a response signal transmitted from another terminal to the transmitted measurement signal, and including the random value and identification information on the other terminal,
wherein the transmitting unit transmits terminal detailed information including at least a physical identifier of the terminal itself together with the identification information on the other terminal when the response signal is received by the receiving unit.

15. A terminal capable of direct terminal-to-terminal communication, the terminal comprising:
a detecting unit configured to detect a measurement signal transmitted from another terminal;
a controlling unit configured to calculate a value associated with the detected measurement signal; and
a transmitting unit configured to transmit a response signal including the calculated value and identification information on the terminal itself, to the detected measurement signal.

16. The terminal according to claim 15, further comprising:
a receiving unit configured to receive first terminal detailed information transmitted from the other terminal as a response to the response signal, and including a physical identifier of the other terminal,
wherein the transmitting unit transmits second terminal detailed information on the terminal itself together with the physical identifier of the other terminal.
